# NEW EUROPEAN PATENT SPECIFICATION

(11) **EP 3 774 336 B2**
(45) Date of publication and mention of the opposition decision: **22.04.2026**
(45) Mention of the grant of the patent: 11.01.2023
(21) Application number: 19719065.5
(22) Date of filing: 09.04.2019
(51) Int. Cl.: B32B 27/08, B32B 27/30, B32B 27/32, B32B 27/34

(54) **AUTOCLAVABLE BARRIER FILM**
AUTOKLAVIERBARE SPERRSCHICHT
FILM BARRIÈRE AUTOCLAVABLE

(30) Priority: 11.04.2018 US 201862655994 P
(43) Date of publication of application: 17.02.2021
(73) Proprietor: Cryovac, LLC, Charlotte, NC 28208 (US)
(72) Inventor: BEKELE, Solomon, Charlotte, NC 28278 (US)
(74) Representative: Uexküll & Stolberg
(86) International application number: PCT/US2019/026478
(87) International publication number: WO 2019/199743

(56) References cited:
- EP-A1- 2 386 411
- EP-A1- 2 648 907
- EP-A2- 1 543 956
- EP-A2- 1 543 956
- WO-A1-01/26897
- WO-A1-2010/110791
- WO-A1-2012/076481
- WO-A2-2006/101969
- WO-A2-2006/102148
- WO-A2-2006/102156
- CN-A- 105 034 504
- US-A1- 2004 241 482
- US-A1- 2008 182 051
- US-A1- 2017 080 692
- "Exact™ 3128 Ethylene-based Plastomer Resin (Product Datasheet)", EXXONMOBIL, 1 January 2017 (2017-01-01), XP093138380, Retrieved from the Internet <URL:https://www.exxonmobilchemical.com/en/chemicals/webapi/dps/v1/datasheets/150000100713/0/en> [retrieved on 20240306]
- "DuPont? Selar® PA 3426 Product Data Sheet", DUPONT PERFORMANCE MATERIALS, 29 March 2017 (2017-03-29), pages 1 - 2, XP055696938
- "Technical Information VERSIFY™ 3200 Plastomer (Technical Information)", DOW, 4 October 2011 (2011-10-04), XP093138387, Retrieved from the Internet <URL:https://www.dow.com/en-us/pdp.versify-3200-plastomer.234588z.html#tech-content> [retrieved on 20240306]
- " AFFINITY™ PL 1850G Polyolefin Plastomer (Technical Information)", DOW, 11 January 2012 (2012-01-11), XP093138392, Retrieved from the Internet <URL:https://www.dow.com/en-us/pdp.affinity-pl-1850g-polyolefin-plastomer.234065z.html#tech-content> [retrieved on 20240306]
- "Escorene™ Ultra LD 761.36 - Ethylene Vinyl Acetate Copolymer Resin (Product Datasheet)", EXXONMOBIL, 6 November 2020 (2020-11-06), XP093138395, Retrieved from the Internet <URL:https://www.exxonmobilchemical.com/en/chemicals/webapi/dps/v1/datasheets/150000000135/0/en> [retrieved on 20240306]
- Technical data sheet VersifyTM 3200 from Dow Chemical
- Technical data sheet AffinityTM PL 1850G from Dow Chemical
- Technical data sheet EscoreneTM Ultra LD-761.36 from ExxonMobil
- Technical data sheet Escorene® LD-134 from ExxonMobil
- Technical data sheet ExceedTM 363C32 from ExxonMobil
- Technical data sheet Grivory G21 from EMS-Grivory/EMS-Chemie AG
- Römpp Chemie-Lexicon, Excerpt “Polyolefin
- Data Sheet DOW ATTANE® 4203
- Roy J. Crawford, James L. Throne, Chapter 2 - ROTATIONAL MOLDING POLYMERS, Editor(s): Roy J. Crawford, James L. Throne, In Plastics Design Library, Rotational Molding Technology, William Andrew Publishing, 2002, Pages 19-68, ISBN 9781884207853, https://doi.org/10.1016/B978-188420785-3.50004-6
- DuPont Product Information about Thermal Properties of Elvax® EVA Resins Measured by Differential Scanning Calorimeter (DSC)

## Description

### Field

The presently disclosed subject matter relates generally to packaging films having an oxygen barrier layer, the films being suitable for making packaging that can withstand autoclaving. The films are useful for the packaging of food, medical supplies and/or other products that are to undergo autoclaving while remaining inside the package.

### Background

The trend in the food processing industry has been to replace metal cans with heat-sealed containers made from polymeric film for the packaging of certain food products stored under sterile conditions. Medical supplies are also often packaged and used in this manner. This particular packaging is known as a retort container, and can comprise flexible pouches and/or rigid trays.

Providing the film with the ability to block the transmission of atmospheric oxygen is also important in order to eliminate or minimize the rate of microbial growth inside the package, particularly in the retort packaging of food products. Minimizing the rate of microbial growth inside the package effectively enhance the shelf life of the product.

Retort flexible pouches can be made of two sheets of flexible polymeric film heat-sealed on three sides before filling. After filling and vacuum drawing to remove oxygen from the inside of the pouch, the fourth side, the open-mouth end, can be heat-sealed. Alternatively, the pouch can be made from a flexible polymeric tube of film where the bottom end is heat-sealed before and after filling, and the open-mouth end heat-sealed. Rigid coextruded trays or tubs can be made for use as retort containers.

Commonly, prior to retort conditions, retort films are irradiated and/or corona treated, which involves subjecting a film material to radiation such as corona discharge, plasma, flame, ultraviolet, X-ray, gamma ray, beta ray, and/or high energy electron treatment to induce crosslinking between molecules of the polymers contained therein. Particularly, it is well known that cross-linking by chemical agents or by high energy ionizing radiation increases heat resistance of the polymer matrix. The chemical cross-links are covalent bonds across separate polymer chains that greatly retard the film tendency to deform and flow at high temperatures, even above the melting point of the polymer. However, crosslinking of films can have undesirable effects. For example, when films containing PVDC are crosslinked to render them autoclavable, the films exhibit a significant negative color shift and produce undesirable chlorinated byproducts. WO 2010/110791 A1 discloses an autoclavable barrier film comprising a seal layer comprising LLDPE having a melt point of more than 115 °C, a skin layer, a barrier layer, and tie layers between the seal layer and the barrier layer and between the barrier layer and the skin layer.

Films designed to package products for autoclaving must withstand the high temperature of the autoclaving process with the package remaining intact and the product remains sterile inside the package. Autoclavable films consisting of polymers having melting points above the temperature of autoclaving can exhibit flex-cracking and corrugation as a result of the autoclaving process.

Accordingly, it would be beneficial to develop an oxygen barrier retort film that is suitable for retort applications, does not exhibit flex-cracking and/or corrugation, and does not require crosslinking.

### Summary

It has been discovered that providing various film layers with a polymer having a melting point less than 121°C improves the autoclaving performance of the film. The presence of the low melting polymer in the seal layer improves the adhesion of the seal layer to the one or more tie layers between the seal layer and the barrier layer, thereby reducing or preventing delamination. The low melting polymer in the seal layer also improves the ability of the seal to withstand autoclaving and helps to reduce or eliminate flex cracking.

The presence of the low melting polymer in the skin layer improves the adhesion of the skin layer to the one or more tie layers between the skin layer and the barrier layer, thereby reducing or preventing delamination. The low melting polymer in the skin layer also improves the ability of the film to withstand autoclaving without flex cracking.

The presence of the low melting polymer in the first and third tie layers improves the adhesion of the tie layers to the seal layer and the barrier layer. The presence of the low melting polymer in the second and fourth tie layers improves the adhesion of these tie layers to the barrier layer and the skin layer. The presence of the low melting polymer in the tie layers also further improves the ability of the film to withstand autoclaving without flex cracking.

A first aspect is directed to an autoclavable barrier film comprising: (A) a seal layer comprising a first low melt point polyolefin, the first low melt point polyolefin having a melt point less than 121°C, the first low melt point polyolefin making up from 5 to 80 wt % of the seal layer, based on total weight of seal layer, the seal layer being a first outer layer; (B) a skin layer comprising a second low melt point polyolefin, the second low melt point polyolefin having a melt point less than 121°C, the second low melt point polyolefin making up from 5 to 80 wt % of the skin layer based on total weight of the skin layer, the skin layer being a second outer layer; (C) a barrier layer comprising at least one member selected from the group consisting of polyvinylidene chloride, polyamide MXD6/MXDI, polyamide 6I/6T; (D) a first tie layer between the seal layer and the barrier layer, the first tie layer comprising a first tie polymer having a melting point less than 121°C, the first tie polymer making up from 50 to 100 wt % of the first tie layer, based on total weight of the first tie layer; and (E) a second tie layer between the barrier layer and the skin layer, the second tie layer comprising a second tie polymer having a melting point less than 121°C, the second tie polymer making up from 50 to 100 wt % of the second tie layer, based on total weight of the second tie layer; wherein the seal layer further comprises a first cyclic olefin copolymer in an amount of from 5 to 30 wt %, based on total seal layer weight, wherein the cyclic olefin copolymer in the seal layer comprises at least one member selected from the group consisting of ethylene/norbornene copolymer and polynorbornene homopolymer; and the skin layer further comprises a second cyclic olefin copolymer in an amount of from 5 to 30 wt %, based on total skin layer weight, wherein the cyclic olefin copolymer in the skin layer comprises at least one member selected from the group consisting of ethylene/norbornene copolymer and polynorbornene homopolymer.

In an embodiment, the first low melt point polyolefin makes up from 10-80 wt %, based on total weight of seal layer. In another embodiment, the first low melt point polyolefin makes up from 10-70 wt %, based on total weight of seal layer. In another embodiment, the first low melt point polyolefin makes up from 10-60 wt %, based on total weight of seal layer.

In an embodiment, the second low melt point polyolefin makes up from 10-80 wt %, based on total weight of skin layer. In another embodiment, the second low melt point polyolefin makes up from 10-70 wt %, based on total weight of skin layer. In another embodiment, the second low melt point polyolefin makes up from 10-60 wt %, based on total weight of skin layer.

In an embodiment, the first tie layer polymer makes up from 60-100 wt % of the first tie layer, based on total weight of first tie layer. In another embodiment, the first tie layer polymer makes up from 70-100 wt %, based on total weight of the first tie layer. In another embodiment, the first tie layer polymer makes up from 80-100 wt %, based on total weight of the first tie layer. In another embodiment, the first tie layer polymer makes up from 90-100 wt %, based on total weight of the first tie layer. In another embodiment, the first tie layer polymer makes up from 95-100 wt %, based on total weight of the first tie layer.

In an embodiment, the second tie layer polymer makes up from 60-100 wt % of the second tie layer, based on total weight of second tie layer. In another embodiment, the second tie layer polymer makes up from 70-100 wt %, based on total weight of the second tie layer. In another embodiment, the second tie layer polymer makes up from 80-100 wt %, based on total weight of the second tie layer. In another embodiment, the second tie layer polymer makes up from 90-100 wt %, based on total weight of the second tie layer. In another embodiment, the second tie layer polymer makes up from 95-100 wt %, based on total weight of the second tie layer.

In an embodiment, the polyvinylidene chloride comprises at least one member selected from vinylidene chloride/methyl acrylate copolymer and vinylidene chloride/vinyl chloride copolymer.

In an embodiment, the polyvinylidene chloride is present in an amount of from 90 to 100 wt %, based on total weight of the barrier layer. In another embodiment, the polyvinylidene chloride is present in an amount of from 50 to 100 wt %, based on total weight of the barrier layer. In another embodiment, the polyvinylidene chloride is present in an amount of from 60 to 100 wt %, based on total weight of the barrier layer. In another embodiment, the polyvinylidene chloride is present in an amount of from 70 to 100 wt %, based on total weight of the barrier layer. In another embodiment, the polyvinylidene chloride is present in an amount of from 80 to 100 wt %, based on total weight of the barrier layer. In another embodiment, the polyvinylidene chloride is present in an amount of from 95 to 100 wt %, based on total weight of the barrier layer.

In an embodiment, the autoclavable barrier film exhibits an oxygen transmission rate of from 0.1 to 10 cm³/100 in² over 24 hr at 0% relative humidity and 23°C, measured in accordance with ASTM D3985-81.

In an embodiment, the seal layer further comprises a first high melt point polyolefin, the first high melt point polyolefin having a melt point greater than 121°C, the first high melt point polyolefin being present in a blend with the first low melt point polyolefin; and, the skin layer further comprises a second high melt point polyolefin, the second high melt point polyolefin having a melt point greater than 121°C, the second high melt point polyolefin being present in a blend with the first low melt point polyolefin and the first high melt point polyolefin.

In an embodiment, the seal layer comprises a blend of the first low melt point polyolefin and the first high melt point polyolefin, with the first low melt point polyolefin being present in an amount of from 10 to 65 wt % based on seal layer weight, the first high melt point polyolefin being present in an amount of from 35 to 80 wt % based on seal layer weight; and the skin layer comprises a blend of the second low melt point polyolefin and the second high melt point polyolefin, with the second low melt point polyolefin being present in an amount of from 10 to 70 wt % based on skin layer weight, the second high melt point polyolefin being present in an amount of from 30 to 75 wt % based on skin layer weight.

In an embodiment, the seal layer comprises a blend of the first low melt point polyolefin and the first high melt point polyolefin, with the first low melt point polyolefin being present in an amount of from 10 to 60 wt % based on seal layer weight, the first high melt point polyolefin being present in an amount of from 40 to 60 wt % based on seal layer weight; and, the skin layer comprises a blend of the second low melt point polyolefin and the second high melt point polyolefin, and the second cyclic olefin copolymer, with the second low melt point polyolefin being present in an amount of from 10 to 60 wt % based on skin layer weight, the second high melt point polyolefin being present in an amount of from 40 to 70 wt % based on skin layer weight.

In an embodiment, the seal layer comprises a blend of the first low melt point polyolefin and the first high melt point polyolefin, with the first low melt point polyolefin being present in an amount of from 15 to 50 wt % based on seal layer weight, the first high melt point polyolefin being present in an amount of from 50 to 70 wt % based on seal layer weight; and, the skin layer comprises a blend of the second low melt point polyolefin and the second high melt point polyolefin, with the second low melt point polyolefin being present in an amount of from 15 to 40 wt % based on skin layer weight, the second high melt point polyolefin being present in an amount of from 45 to 60 wt % based on skin layer weight.

In an embodiment, the first low melt point polyolefin comprises at least one member selected from the group consisting of ethylene/butene copolymer, ethylene/hexene copolymer, ethylene/octene copolymer, and ionomer resin; and, the first high melt point polyolefin comprises at least one member selected from the group consisting of ethylene/propylene copolymer, high density polyethylene; the second low melt point polyolefin comprises at least one member selected from the group consisting of ethylene/butene copolymer, ethylene/hexene copolymer, and ethylene/octene copolymer, ionomer resin; and, the first high melt point polyolefin comprises at least one member selected from the group consisting of ethylene/propylene copolymer, and high density polyethylene.

In an embodiment, the seal layer comprises the first cyclic olefin copolymer in an amount of from 5 to 20 wt %, or from 10 to 20 wt %, or from 10 to 15 wt %, based on total seal layer weight.

In an embodiment, the skin layer comprises the second cyclic olefin copolymer in an amount of from 5 to 20 wt %, or from 10 to 20 wt %, or from 10 to 15 wt %, based on total seal layer weight.

The cyclic olefin copolymer in the seal layer comprises at least one member selected from the group consisting of ethylene/norbornene copolymer and polynorbornene homopolymer, and the cyclic olefin copolymer in the skin layer comprises at least one member selected from the group consisting of ethylene/norbornene copolymer and polynorbornene homopolymer.

In an embodiment, the seal layer comprises a blend of the first low melt point poly olefin, the first high melt point poly olefin, and the first cyclic olefin copolymer, with the first low melt point poly olefin being present in an amount of from 10 to 50 wt % based on seal layer weight, the first high melt point polyolefin being present in an amount of from 35 to 80 wt % based on seal layer weight, and the first cyclic olefin copolymer being present in an amount of from 5 to 25 wt % based on seal layer weight; and the skin layer comprises a blend of the second low melt point polyolefin, the second high melt point polyolefin, and the second cyclic olefin copolymer, with the second low melt point polyolefin being present in an amount of from 10 to 45 wt % based on skin layer weight, the second high melt point polyolefin being present in an amount of from 30 to 75 wt % based on skin layer weight, and the second cyclic olefin copolymer being present in an amount of from 5 to 25 wt % based on skin layer weight.

In an embodiment, the seal layer comprises a blend of the first low melt point polyolefin, the first high melt point polyolefin, and the first cyclic olefin copolymer, with the first low melt point polyolefin being present in an amount of from 10 to 50 wt % based on seal layer weight, the first high melt point polyolefin being present in an amount of from 40 to 60 wt % based on seal layer weight, and the first cyclic olefin copolymer being present in an amount of from 10 to 20 wt % based on seal layer weight; and the skin layer comprises a blend of the second low melt point polyolefin, the second high melt point polyolefin, and the second cyclic olefin copolymer, with the second low melt point polyolefin being present in an amount of from 10 to 30 wt % based on skin layer weight, the second high melt point polyolefin being present in an amount of from 40 to 70 wt % based on skin layer weight, and the second cyclic olefin copolymer being present in an amount of from 10 to 20 wt % based on skin layer weight.

In an embodiment, the seal layer comprises a blend of the first low melt point polyolefin, the first high melt point polyolefin, and the first cyclic olefin copolymer, with the first low melt point polyolefin being present in an amount of from 15 to 40 wt % based on seal layer weight, the first high melt point polyolefin being present in an amount of from 50 to 70 wt % based on seal layer weight, and the first cyclic olefin copolymer being present in an amount of from 12 to 18 wt % based on seal layer weight; and the skin layer comprises a blend of the second low melt point polyolefin, the second high melt point polyolefin, and the second cyclic olefin copolymer, with the second low melt point polyolefin being present in an amount of from 15 to 25 wt % based on skin layer weight, the second high melt point polyolefin being present in an amount of from 45 to 60 wt % based on skin layer weight, and the second cyclic olefin copolymer being present in an amount of from 12 to 18 wt % based on skin layer weight.

In an embodiment, the first tie polymer comprises at least one member selected from the group consisting of ethylene/unsaturated ester copolymer, ethylene/unsaturated acid copolymer, and anhydride-functional polyolefin, and the first tie layer comprises the first tie polymer in an amount of from 80 to 100 wt %, based on weight of the first tie layer; and the second tie polymer comprises at least one member selected from the group consisting of ethylene/unsaturated ester copolymer, ethylene/unsaturated acid copolymer, and anhydride-functional polyolefin, and the second tie layer comprises the second tie polymer in an amount of from 80 to 100 wt %, based on weight of the first tie layer.

In an embodiment, the first tie polymer and the second tie polymer each comprise at least one member selected from the group consisting of ethylene/vinyl acetate copolymer, ethylene/methyl acrylate copolymer, ethylene/acrylic acid copolymer, and ethylene/methacrylic acid copolymer. In an embodiment, the first tie polymer and the second tie polymer each comprise ethylene/vinyl acetate having a vinyl acetate content of at least 16 wt %, or at least 20 wt %, or at least 22 wt %, or at least 24 wt %, or from 12 to 44 wt %, or from 16 to 38 wt %, or from 20 to 36 wt %, or from 22 to 32 wt % vinyl acetate.

In an embodiment the autoclavable film further comprises: (F) a third tie layer between the first tie layer and the seal layer, the third tie layer comprising a third tie polymer having a melting point less than 121°C, the third tie polymer making up from 10 to 80 wt %, based on total layer weight; and (G) a fourth tie layer between the second tie layer and the skin layer, the fourth tie layer comprising a fourth tie polymer having a melting point less than 121°C, the fourth tie polymer making up from 10 to 80 wt %, based on total layer weight. The third tie polymer improves adhesion of the first tie layer to the seal layer. The fourth tie layer improves the adhesion of the second tie layer to the skin layer.

In an embodiment, the third tie polymer comprises a first ethylene/alpha-olefin copolymer having a density ≤ 0.90 g/cm³. In another embodiment, the first ethylene/alpha-olefin copolymer has a density of from 0.86-0.90 g/cm³, or from 0.86-0.89 g/cm³, or from 0.86-0.88 g/cm³, or from 0.865-0.875g/cm³. In an embodiment, the first ethylene/alpha-olefin copolymer comprises a member selected from the group consisting of ethylene/butene, ethylene/hexene, and ethylene/octene. In an embodiment, the first ethylene/alpha-olefin copolymer makes up from 50-100 wt % of the third tie layer; in another embodiment from 75-100 wt %, in another embodiment from 90-100 wt %, in another embodiment from 95-100 wt %, and in another embodiment first ethylene/alpha-olefin copolymer makes up 100 wt % of the third tie layer.

In an embodiment, the fourth tie polymer comprises a second ethylene/alpha-olefin copolymer having a density ≤ 0.90 g/cm³. In another embodiment, the second ethylene/alpha-olefin copolymer has a density of from 0.86-0.90 g/cm³, or from 0.86-0.89 g/cm³, or from 0.86-0.88 g/cm³, or from 0.865-0.875g/cm³. In an embodiment, the second ethylene/alpha-olefin copolymer comprises a member selected from the group consisting of ethylene/butene, ethylene/hexene, and ethylene/octene. In an embodiment, the first ethylene/alpha-olefin copolymer makes up from 50-100 wt % of the third tie layer; in another embodiment from 75-100 wt %, in another embodiment from 90-100 wt %, in another embodiment from 95-100 wt %, and in another embodiment first ethylene/alpha-olefin copolymer makes up 100 wt % of the third tie layer.

In an embodiment, the film has a thickness of from 3 to 10 mils. In another embodiment, the film has a thickness of from 4 to 10 mils. In another embodiment, the film has a thickness of from 3 to 5 mils.

In an embodiment, the film has a thickness of from 3-5 mils and is used to make a form-fill-seal packaging article or a lid to be sealed to a flange of a thermoformed pouch. In another embodiment, the film has a thickness of from 4 to 10 mils and is used to make a thermoformed pouch.

In an embodiment, the film does not comprise a crosslinked polymer network.

A second aspect is directed to an autoclavable packaging article comprising an autoclavable barrier film according to the first aspect, the packaging article comprising a member selected from the group consisting of a thermoformed pouch, a lid for a thermoformed pouch, an end seal bag, a side-seal bag, an L-seal bag, a U-sealed bag, and a form-fill-seal pouch. The second aspect may comprise any autoclavable multilayer film according to any embodiment of the first aspect.

A third aspect is directed to a method of preparing a retorted packaged product. The method comprises A) placing a product in a packaging article comprising a member selected from the consisting of thermoformed pouch, end seal bag, side-seal bag, L-seal bag, U-sealed bag, and form-fill-seal pouch, the packaging article comprising an autoclavable film according to the first aspect; B) sealing the article closed such that the product is surrounded by the multilayer packaging film; and C) heating the packaged product to a temperature of at least about 121°C for at least 30 minutes. The third aspect may utilize any packaging article comprising any autoclavable multilayer film according to any embodiment of the first aspect.

### Brief Description of the Drawings

Figure 1 illustrates a schematic view of a process for making the multilayer autoclavable film.
Figure 2 is a perspective view of a thermoformed pouch made from an autoclavable film.

### Detailed Description

As used herein, the term "polymer" refers to the product of a polymerization reaction, and can be inclusive of homopolymers, copolymers, terpolymers, etc. In some embodiments, the layers of a film can consist essentially of a single polymer, or can have still additional polymers together therewith, *i.e.,* blended therewith.

As used herein, terminology employing a "/" with respect to the chemical identity of a copolymer (e.g., "an ethylene/alpha-olefin copolymer"), identifies the comonomers that are copolymerized to produce the copolymer. Such phrases as "ethylene alpha-olefin copolymer" is the respective equivalent of "ethylene/alpha-olefin copolymer."

"Ethylene homopolymer or copolymer" as used herein includes ethylene homopolymers and copolymers such as, but not limited to, low density polyethylene, high density polyethylene, medium density polyethylene, very low density polyethylene, ethylene/α-olefin copolymer, homogeneous ethylene/ α-olefin copolymer, ethylene/vinyl acetate copolymer, ethylene/alkyl acrylate copolymer, ethylene/methacrylic acid copolymer, ionomer resin, and combinations thereof.

As used herein, the term "ethylene/alpha-olefin copolymer" ("EAO") refers to copolymers of ethylene with one or more comonomers selected from C₃ to C₁₀ alpha-olefins such as propene, butene-1, hexene-1, octene-1, etc., in which the molecules of the copolymers comprise long polymer chains with relatively few side chain branches arising from the alpha-olefin that was reacted with ethylene. The molecular structure is to be contrasted with conventional high pressure low or medium density polyethylenes that are highly branched with respect to EAOs and which high pressure polyethylenes contain both long chain and short chain branches. EAOs can include such heterogeneous materials as linear medium density polyethylene (LMDPE), linear low density polyethylene (LLDPE), and very low and ultra low density polyethylene (VLDPE and ULDPE), such as DOWLEX^{™} and ATTANE^{™} resins supplied by Dow Chemical Company (Midland, Michigan, United States of America), and ESCORENE^{™} resins supplied by Exxon (Houston, Texas, United States of America); as well as linear homogeneous ethylene/alpha olefin copolymers (HEAO) such as TAFMER^{™} resins supplied by Mitsui Petrochemical Corporation (New York, New York, United States of America), EXACT^{™} and EXCEED^{™} resins supplied by Exxon, long chain branched (HEAO) AFFINITY^{™} resins and ELITE^{™} resins supplied by the Dow Chemical Company (Midland, Michigan, United States of America), ENGAGE^{™} resins supplied by DuPont Dow Elastomers (Wilmington, Delaware, United States of America), and SURPASS^{™} resins supplied by Nova Chemicals (Moon Township, Pennsylvania, United States of America). An EAO can, for example, have a density of between 0.916 and 0.945 grams/cc.

As used herein, the term "polypropylene" refers to a propylene homopolymer and/or copolymer having greater than about 50 mole percent propylene prepared by conventional heterogeneous Ziegler-Natta type initiators and/or by single site catalysis. In some embodiments, propylene copolymers can be prepared with ethylene or butene comonomers.

As used herein, the term "ethylene/vinyl acetate copolymer" or "EVA", refers to a copolymer formed from ethylene and vinyl acetate monomers, wherein the ethylene-derived units in the copolymer are present in relatively major amounts, such as between about 60 to about 98 percent, while the vinyl acetate-derived units in the copolymer are present in relatively minor amounts, such as between about 2 and about 40 percent.

As used herein, the phrase "ethylene/methyl acrylate copolymer", or "EMA", refers to a copolymer formed from ethylene and methyl acrylate monomers, wherein the ethylene-derived units in the copolymer are present in relatively major amounts, such as between about 60 to about 98 percent, while the methyl acrylate-derived units in the copolymer are present in relatively minor amounts, such as between about 2 and about 40 percent.

As used herein, the term "cyclic olefin copolymer" refers to a compound containing a polymerizable carbon-carbon double bond that can be contained within an alicyclic ring, *e.g.,* as in norbornene, or linked to an alicyclic ring, *e.g.,* as in vinyl cyclohexane. Polymerization of the cyclic olefin provides a polymer comprising an alicyclic ring as part of and/or pendant to the polymer backbone. Cyclic olefin copolymers include, but are not limited to, ethylene/norbornene copolymer, supplied by Ticona (Florence, Kentucky, United States of America) under the trademark TOPAS^{™}, as well as cyclo olefin polymer from Zeon chemicals L.P. (Tokyo, Japan) under the trademark ZEONOR^{™} cyclo olefin polymer, and ethylene/norbornene copolymer supplied by Mitsui (New York, New York, United States of America) under the trademark APEL^{™} cyclic olefin copolymer.

As used herein, the term "film" is used in a generic sense to include plastic web, regardless of whether it is film or sheet. As used herein, the term "film" refers to a film, laminate, sheet, web, coating, or the like, that is used to package a product. The film is used as a component in a rigid, semi-rigid, or flexible product, and/or can be adhered to a non-polymeric or non-thermoplastic substrate, such as paper or metal.

As used herein, the term "extrusion" refers to the process of forming continuous shapes by forcing a molten plastic material through a die, followed by cooling or chemical hardening. Immediately prior to extrusion through a die, a relatively high-viscosity polymeric material can be fed into a rotating screw of variable pitch, which forces the material through the die.

As used herein, the term "coextrusion" refers to the process of extruding two or more materials through a single die with two or more orifices arranged such that the extrudates merge and weld together into a laminar structure before chilling, *i.e.,* quenching or air cooling. Coextrusion can be employed in film blowing, free film extrusion, and/or extrusion coating processes.

As used herein, the phrases "inner layer" and "internal layer" refers to any layer of a multilayer film having both of its principal surfaces directly adhered to another layer of the film. In multilayer films, all layers between the outer layers are herein referred to as "internal" film layers.

As used herein, the phrase "inside layer" refers to the outer layer of a multilayer film packaging a product that is closest to the product, relative to the other layers of the multilayer film. The seal layer is generally intended to be used as the inside layer of a packaging article comprising the multilayer autoclavable film.

As used herein, the phrase "outer layer" refers to a film layer having less than two of its principal surfaces directly adhered to another layer of the film. Every multilayer film has two outer layers, each of which has a principal surface adhered to only one other layer of the multilayer film. In a monolayer film there is only one layer, which is an outer layer in that neither of its two principal surfaces are adhered to another layer of the film.

As used herein, the phrase "outside layer" refers to the outer layer, of a multilayer film packaging a product that is furthest from the product relative to the other layers of the multilayer film. Likewise, the "outside surface" of a bag is the surface away from the product being packaged within the bag.

As used herein, the term "seal" refers to any bond of a first region of an outer film surface to a second region of an outer film surface, including heat or any type of adhesive material, thermal or otherwise. In some embodiments, the seal is formed by heating the regions to at least their respective seal initiation temperatures. The sealing can be performed by any one or more of a wide variety of means, such as, but not limited to, using a heat sealing, e.g., melt-bead sealing, thermal sealing, impulse sealing, dielectric sealing, radio frequency sealing, ultrasonic sealing, hot air, hot wire, infrared radiation, and the like.

As used herein, the phrases "seal layer", "sealing layer", "heat seal layer", and "sealant layer" refers to an outer layer or layers involved in the sealing of a film to itself, another layer of the same or another film, and/or another article that is not a film. The seal layer is usually the innermost layer of the packaging article. In some embodiments of the autoclavable film, the sealant layer can be selected to have minimum effect on taste or color of the package contents, to be unaffected by the product, and/or to withstand sealing conditions (such as liquid droplets, grease, dust, and/or the like). In some embodiments, the sealant can be a resin that is capable of bonding to itself (sealing) at temperatures substantially below the melting temperature of the outermost layer so that the appearance of the outermost layer is not affected by the sealing process and does not stick to the jaws of a sealing bar. Heat sealing can be performed by one or more of a wide variety of manners, such as by using a heat seal technique (*e.g.,* melt-bead sealing, thermal sealing, impulse sealing, ultrasonic sealing, hot air, hot wire, infrared radiation, and the like).

In some embodiments of the autoclavable film, the seal layer may include thermoplastic polymers, including but not limited to polyolefin, polyamide, polyester, polyvinyl chloride, ionomer resin, ethylene/alpha-olefin copolymer, polypropylene, polypropylene copolymer, ethylene/vinyl acetate copolymer, homogeneous ethylene/alpha-olefin copolymer, ionomer and/or combinations thereof.

In some embodiments of the autoclavable packaging article, the heat seal is a relatively narrow seal, e.g., 0.2 to 3 mm wide; in other embodiments, the heat seal is wide, e.g., about 10 to 18 mm; and in yet other embodiments, the seal is of intermediate width, e.g., 3.1 to 9.9 mm wide.

The material from which the seal layer is formed must be able to maintain a liquid-tight heat-seal in the severe conditions that are typically encountered by a pouch containing a meat product or other liquid-containing product. During autoclaving, pouches are exposed to high temperatures (e.g., 120°C) for periods of up to about 90 minutes, sometimes under high humidity and elevated pressure. Thus, the heat-seal material must have sufficient heat resistance to maintain a seal under such conditions. Additionally, the heat seal material must have sufficient impact resistance to maintain a seal when the filled pouch is dropped or otherwise handled roughly.

As used herein, the term "skin layer" refers to an outer layer of a multilayer film in packaging a product, which layer is intended to form the outside layer of a packaging article comprising the film. The skin layer is therefore subject to abuse. The skin layer is sometimes referred to as an "abuse layer." An abuse layer serves to resist abrasion, puncture, or other potential causes of reduction of package integrity or package appearance quality. Abuse layers can comprise any polymer, so long as the polymer contributes to achieving an integrity goal and/or an appearance goal. In some embodiments, the skin layer can be designed to serve as an abuse layer. However, the abuse layer can be any film layer which is designed to resist abrasion, puncture, or other potential causes of reduction of package integrity or package appearance.

The autoclavable film may comprise at least 5 layers. More particularly, the autoclavable film may have from 5 to 20 layers, or from 5 to 12 layers, or from 5 to 10 layers. Thus, the autoclavable film may have 5, 6, 7, 8, 9, 10, 11, 12, 13, 14, 15, 16, 17, 18, 19, or 20 layers.

Continuing, the disclosed multilayer film can have any total thickness, so long as the film provides the desired properties for the particular packaging operation in which the film is used. In some embodiments, the autoclavable film can have a total thickness (i.e., a combined thickness of all layers), of from about 0.25 to 50 mils (1 mil equals 0.001 inch); in some embodiments, from about 0.5 to 20 mils; in some embodiments, from about 2 to 14 mils; and in some embodiments, from 2 to 5 mils.

As used herein, the term "barrier" and/or the phrase "barrier layer", as applied to films and/or layers, are used with reference to the ability of a film or layer to serve as a barrier to one or more gases or liquids. In the packaging art, barrier layers can include, but are not limited to, ethylene/vinyl alcohol copolymer, polyvinylidene chloride (including vinylidene chloride methyl acrylate copolymer and vinylidene chloride vinyl chloride copolymer), saponified ethylene/vinyl acetate copolymer, polyalkylene carbonate, polyamide, polyethylene naphthalate, polyester, polyacrylonitrile, and combinations thereof. In some embodiments, the barrier layer can comprise a thermal stabilizer (such as, for example, an HCl scavenger, e.g., epoxidized soybean oil) and a lubricating processing aid that can comprise one or more acrylates.

As used herein, the term "oxygen barrier" refers to polymeric or metallic materials with low oxygen transmission rates, *i.e.,* a low rate of oxygen gas passing through the entire film. Such films are referred to as presenting a high barrier to oxygen. In some embodiments, the oxygen permeability of the barrier layer (in the absence of an oxygen scavenger) is less than about 500 cubic centimeters of oxygen/square meter•day•atmosphere (cm³ O₂/m²•d•atm) tested at 1 mil thick, at 25°C, at 0% relative humidity, according to ASTM D3985, and in some embodiments less than about 100, in some embodiments less than about 50, and in some embodiments less than about 25 cm³ O₂/m²•d•atm, such as less than about 10, less than about 5, and less than about 1 cm³ O₂/m²•d•atm. Examples of polymeric materials with low oxygen transmission rates include, but are not limited to: polyvinylidene dichloride (PVDC), vinylidene chloride copolymer such as vinylidene chloride/methyl acrylate copolymer, ethylene/vinyl alcohol copolymer (EVOH), polyamide, polyester, and polyacrylonitrile, and/or blends thereof. In some embodiments, oxygen barrier materials can comprise high aspect ratio fillers that create a tortuous path for permeation (e.g., nanocomposites). In some embodiments, the oxygen barrier materials can be enhanced by the incorporation of an oxygen scavenger. In some embodiments, metal foil, metallized substrates (e.g., metallized polyethylene terephthalate (PET), metallized polyamide, or metallized polypropylene), or coatings comprising SiOx or AlOx compounds is used to provide low oxygen transmission.

As used herein, the phrase "oxygen transmission rate" refers to the rate of oxygen gas passing through an entire film structure. In some embodiments, the disclosed film desirably exhibits an oxygen transmission rate (OTR) after at least one hour after autoclaving of about 0 to 10 cc/m²/atm/day at 0% relative humidity and 23°C at 1.0 mils or less. Oxygen transmission may be measured according to ASTM D-3985-81 which is incorporated herein by reference.

In some embodiments, the autoclavable multilayer film can comprise one or more oxygen barrier layers that can be made from materials having an oxygen permeability of less than about 500 cm³ O₂/m² day•atmosphere, or less than about 100, or less than about 50, or less than about 25, or less than about 10, or less than about 5, or less than about 1 cm³ O₂/m² day•atmosphere. In some embodiments, the barrier layer has an OTR of from about 0 to 5 cc/m²/atm/day; in some embodiments, from about 0 to 2 cc/m²/atm/day. OTR refers to the rate of oxygen gas passing through an entire film structure and can be measured according to ASTM D-3985-81, tested at 25°C.

In some embodiments, oxygen barrier layers can comprise, but are not limited to, oriented polyvinylidene chloride (PVDC), PET, ethylene vinyl alcohol (EVOH), semicrystalline polyamide (e.g., polyamide 6, polyamide 66, polyamide 6/66, polyamide 12, polyamide 10), amorphous polyamide (including polyamide 6I/6T and polyamide MXD6/MXDI), biaxially oriented nylon (including biaxially oriented polyamide 6), polyacrylonitrile, vinylidene chloride/methyl acrylate copolymer, polyamide, and polyester blends or composites of the same as well as related copolymers thereof. If the autoclavable film is not intended for microwave heating, barrier layers can comprise metallized and/or silicon oxide-coated polymers. In some applications, the functions of structure and barrier layers can be combined in a single layer of a suitable resin. For example, in some embodiments nylon and/or PET can be suitable for both structural and barrier functions.

In some embodiments, the multilayer film comprises a barrier layer comprising a vinylidene chloride copolymer. The vinylidene chloride copolymer can be selected from the group comprising vinylidene chloride/methyl acrylate copolymer, vinylidene chloride/vinyl chloride copolymer, and combinations thereof. The vinylidene chloride/methyl acrylate copolymer can have a methyl acrylate comonomer content of about 10% or less by weight of the copolymer. The vinylidene chloride/methyl acrylate copolymer can have a methyl acrylate comonomer content of about 10%, 9%, 8%, 7%, 6%, 5%, 4%, 3%, 2%, and/or 1% or less.

The vinylidene chloride/vinyl chloride copolymer can have a vinyl chloride comonomer content of about 25% or less by weight of the copolymer. The vinylidene chloride/vinyl chloride copolymer can have a vinyl chloride comonomer content of about 25%, 24%, 23%, 22%, 21%, 20%, 19%, 18%, 17%, 16%, 15%, 14%, 13%, 12%, 11%, 10%, 9%, 8%, 7%, 6%, 5%, 4%, 3%, 2%, 1%, or less.

In addition to or independent of the oxygen barrier layer, in some embodiments one or more layer of the autoclavable multilayer film may comprise an oxygen scavenger. As would be readily apparent to one of ordinary skill in the art, an oxygen scavenging material is a composition, compound, continuous or discontinuous film layer, coating, or the like, that can consume, deplete, and/or react with oxygen from a given environment. In some embodiments, the oxygen scavenging material can be selected from the group comprising: i) oxidizable organic compound and a transition metal catalyst, ii) ethylenically unsaturated hydrocarbon and a transition metal catalyst, iii) a reduced form of a quinone, a photoreducible dye, or a carbonyl compound which has absorbance in the UV spectrum, iv) a polymer having a polymeric backbone, cyclic olefinic pendent group, and linking group linking the olefinic pendent group to the polymeric backbone, v) a copolymer of ethylene and a strained, cyclic alkylene, vi) ethylene/vinyl aralkyl copolymer, vii) ascorbate, viii) isoascorbate, ix) sulfite, x) ascorbate and a transition metal catalyst, the catalyst comprising a simple metal or salt, or a compound, complex or chelate of the transition metal, xi) a transition metal complex or chelate of a polycarboxylic acid, salicylic acid, or polyamine, xii) a tannin, xiii) reduced metal, xiv) a polymer or oligomer having at least one cyclohexene group, and a transition metal salt, compound, or complex, wherein the polymer or oligomer is prepared from the reaction of a tetrahydrophthalic anhydride with at least one of a diol, a hydroxy compound, or a polyhydroxy compound, and xv) a polymer or oligomer having at least one cyclohexene group, and a transition metal salt, compound, or complex, wherein the polymer or oligomer is prepared from the reaction of a tetrahydrobenzyl alcohol with one or more compounds having an ester functionality.

Inorganic and organic oxygen scavengers suitable for commercial use in conjunction with packaging articles comprising the autoclavable multilayer film, such as sachets and purge control pads, are disclosed in U.S. Patent Nos. 5,977,212; 5,941,037; 5,985,169; 6,007,885; 6,228,284 B1; 6,258,883 B1; 6,274,210 B1; 6,284,153 B1; and 6,387,461 B1.

The barrier layer provides the autoclavable film with a barrier to the transmission of moisture, i.e., water vapor. A moisture barrier is important for the packaging of products containing water, as the moisture barrier assists in preventing the product from drying out, e.g., preventing meat from losing its juice fraction.

In some embodiments, the moisture barrier layer can comprise polyvinylidene chloride, polyolefin (e.g. polyethylene), polyester, maleic anhydride grafted polyester, polyethylene terephthalate, polyacrylonitrile copolymer, polyamide, ethylene vinyl alcohol copolymer, ethylene vinyl acetate copolymer, aliphatic polyketone, liquid crystalline polymer, nanosize particles of a modified clay, polypropylene, propylene copolymer, hydrocarbon, and/or combinations thereof.

As used herein, the phrase "moisture vapor permeability" refers to the amount of moisture vapor that can pass through a specified amount of a substance (such as, e.g., a film) in a specified period of time, usually expressed in units of g-mil/in²-day-atm. As used herein, the phrase "moisture vapor transmission rate" refers to the rate at which water passes through a polymer film. As used herein, moisture vapor transmission rate is measured according to ASTM-F1492.

As used herein, the term "tie layer" refers to any internal film layer having the primary purpose of adhering two layers to one another. In some embodiments, the autoclavable film comprises one or more tie layers adapted for improving the adherence of one layer of said film to another layer.

A tie layer may contain a copolymer formed by the copolymerization of nonpolar monomer with a polar monomer, e.g., ethylene/unsaturated acid copolymer, ethylene/unsaturated ester copolymer, polyurethane, and/or combinations thereof, so that the tie layer is capable of bonding to nonpolar polymers (e.g., polyethylene) as well as bonding to polar polymers, such as polyvinylidene chloride. Alternatively, tie layer may comprise a nonpolar polymer having a polar group grafted thereon. In some embodiments, tie layers can comprise at least one member of the group including, but not limited to, anhydride modified polyolefin, ethylene/unsaturated ester copolymer, ethylene/vinyl acetate copolymer, anhydride grafted ethylene/vinyl acetate copolymer, ethylene/methyl acrylate copolymer, anhydride grafted ethylene/methyl acrylate copolymer, ethylene/alpha-olefin copolymer, anhydride grafted ethylene/alpha-olefin copolymer, anhydride grafted polypropylene, anhydride grafted low density polyethylene, anhydride grafted high density polyethylene, ionomer resin, ethylene/unsaturated acid copolymer, ethylene/acrylic acid copolymer, ethylene/methacrylic acid copolymer, polymers that contain mer units derived from at least one of C₂ - C₁₂ alpha-olefin, styrene, amide, ester, and urethane, and/or combinations thereof. In some embodiments, tie layers can comprise at least one member selected from the group including, but not limited to, anhydride modified grafted linear low density polyethylene, anhydride grafted low density polyethylene, homogeneous ethylene/alpha-olefin copolymer, anhydride grafted ethylene/methyl acrylate copolymer, and/or anhydride grafted ethylene/vinyl acetate copolymer.

In some embodiments, the tie layer can comprise ethylene/methyl acrylate copolymer, ethylene/vinyl acetate copolymer and/or combinations thereof. In some embodiments, the ethylene/methyl acrylate copolymer has a methyl acrylate comonomer content of about 20% or less by weight of the copolymer. In some embodiments, the ethylene/methyl acrylate copolymer can have a methyl acrylate comonomer content of about 20%, 19%, 18%, 17%, 16%, 15%, 14%, 13%, 12%, 11%, 10%, 9%, 8%, 7%, 6%, 5%, 4%, 3%, 2%, and/or 1%. In some embodiments, the ethylene/vinyl acetate copolymer has a vinyl acetate comonomer content of about 20% or less by weight of the copolymer. Thus, in some embodiments, the ethylene/vinyl acetate copolymer can have a vinyl acetate comonomer content of about 20%, 19%, 18%, 17%, 16%, 15%, 14%, 13%, 12%, 11%, 10%, 9%, 8%, 7%, 6%, 5%, 4%, 3%, 2%, and/or 1%.

In some embodiments, the tie layer can have a thickness of from about 0.001 to about 0.05 mm, in some embodiments from about 0.0015 to about 0.025 mm, in some embodiments from about 0.0025 to about 0.01 mm, and in some embodiments from about 0.003 to about 0.008 mm. In some embodiments, the tie layer can have a thickness of from about 1 to about 70% of the total thickness of the multilayer film; in some embodiments, from about 1 to about 40%; in some embodiments, from about 2 to about 30%; in some embodiments, from about 2 to about 20%; in some embodiments, from about 2 to about 15%; in some embodiments, from about 2 to about 10%; and in some embodiments, from about 2 to about 5%.

As used herein, the term "adhesive" refers to a liquid adhesive applied to a first film for the purpose of laminating the first film to a second film. The autoclavable film can be laminated to a second film which is printed, with the second film providing the resulting laminate with an improved aesthetic appearance in terms of gloss, print quality, etc. Suitable second films include biaxially oriented polyester, biaxially oriented polypropylene, and biaxially oriented polyamide. The second film is not needed in order to render the multilayer autoclavable film capable of withstanding the autoclaving process.

As used herein, the phrases "abuse layer" and "puncture-resistant layer" refers to any layer that serves to resist abrasion, puncture, and other potential causes of reduction of package integrity, as well as potential causes of reduction of package appearance quality.

As used herein, the term "packaging article" refers to a film sealed to itself or another component of the article, in a configuration suitable for enclosing a product to be packaged.

As used herein, the phrase "packaged product" refers to a product surrounded by a packaging article.

As used herein, the term "bag" refers to a container made from one or more plies of a flexible material, open on one side. More specifically, the term "bag" include end-seal bags, side-seal bags, L-seal bags, backseamed bags, and U-sealed bags. An end-seal bag is made from a desired length of seamless film tubing, and has an open top, side edges formed of folded film edges formed by the tubing in lay-flat configuration, and a bottom seal which is a transverse heat seal at (or near) the end of the tubing, to form the bag bottom. A side-seal bag may be made from a folded flat film and has an open top, a seamless (folded film) bottom edge, with each of its two side edges having a seal therealong. An L-seal bag may also be made from a folded flat film and has an open top, a bottom seal, one side-seal along a first side edge, and a seamless (*i.e*., folded film) second side edge. A U-sealed bag is made by sealing two separate film pieces together, and has an open top, a first side seal along (or near) a first side edge of the bag, a second side seal along (or near) a second side edge of the bag, and a bottom seal along (or near) the bottom edge of the bag. Although seals along the side and/or bottom edges can include the very edge itself, (*i.e*., seals of a type commonly referred to as "trim seals"), typically the seals are spaced inward (*i.e*., from about ¼ inch to about ½ inch) from the bag side edges. In some embodiments, these seals are made using an impulse-type heat sealing apparatus that utilizes a bar that is quickly heated and then quickly cooled. A form-fill-and-seal packaging article is made from a flat film which is configured to form a backseamed tubing by making a longitudinal seal running the length of the article, the backseam seal being either a lap seal or a fin seal. A first transverse seal is made by sealing across the backseamed tubing to form a first end seal. After a desired quantity of product is placed inside the backseamed tubing near or against the first transverse seal, a second transverse seal is made at the other end of the package to close the package around the product. Various bag types are disclosed in U.S. Patent No. 6,790,468, to Mize et al., which is hereby incorporated in its entirety by reference thereto.

As used herein, the term "sterilize" refers to the effective inactivation or killing of microbes contained in or on a product. The level of inactivation or killing can vary, but in some embodiments can encompass an amount and/or level accepted by the applicable commercial and/or FDA standards for the intended product.

As used herein, the verb "to retort" (and the equivalent verb "to autoclave") refers to a process of subjecting an article, such as for example a packaged food product, to sterilizing conditions of high temperature *(i.e.,* from about 121°C to about 200°C) for a period of from about 10 minutes to about 3 hours or more, in the presence of water, steam, and/or pressurized steam. "Retortable" and "autoclavable" as used herein also have the same meaning. Typical autoclave conditions can include sterilizing conditions of high temperatures (between about 250° F. and 300° F) for a period of time between 10 minutes and 60 minutes in the presence of water, steam, and/or pressurized steam. Autoclaving can also be carried out at 121-125°C and 30-50 psi (pounds per square inch) for at least 30 minutes.

As used herein, the term "retortable film" or "autoclavable film" refer to a packaging film that can be formed into a packaging article, filled with a product, heat sealed to enclose the product inside the packaging article, and subjected to retort (as described above), without delamination of the layers of the film during or after the retort process, without loss of film barrier properties, and without seal failure. In some embodiments, the retort process can be carried out at elevated pressure. For example, in some embodiments the retort process is carried out with the packaged products being placed in a pressurized environment of from about 20 psi to about 100 psi, or from about 30 psi to about 40 psi.

Regardless of the structure of the autoclavable multilayer film, one or more conventional packaging film additives can be included therein. Examples of additives that can be incorporated in the autoclavable film can include, but are not limited to, antiblocking agents, antistats, antioxidants, dyes, pigments, antifogging agents, plasticizers, stabilizers, slip agents, colorants, flavorants, fillers, antimicrobial agents, scents, processing agents, fire retardants, UV absorbers, meat preservatives, and combinations thereof. For example, one or more antiblocking agents (such as corn starch and/or ceramic microspheres) can be included in and/or on one or both outer layers of the film structure when the multilayer film is to be processed at high speeds.

In some embodiments, the antiblocking agent can comprise a masterbatch having about 80%, by weight of the masterbatch, of FORTIFLEX^{™} T60-500-119, a high density polyethylene with a density of 0.961 grams/cc; about 16%, by weight of the masterbatch, of SILTON JC30A^{™}, a sodium calcium aluminum silicate, NaCaAl(Si₂O₇); and about 4 weight %, by weight of the masterbatch, of CLEAR Block80^{™} talc. In some embodiments, the antiblocking agent can comprise a masterbatch having a carrier resin, polypropylene, and/or silica. In some embodiments, the antiblocking agent can comprise a masterbatch having about 88 weight %, by weight of the masterbatch, of high density polyethylene, with about 8 weight %, by weight of the masterbatch, of SILTON JC30A^{™}, a sodium calcium aluminum silicate, NaCaAl(Si₂O₇); about 2 weight %, by weight of the masterbatch, of CLEAR Block80^{™} talc; and about 2 weight %, by weight of the masterbatch, of erucamide wax as a slip agent.

In some embodiments, additional materials, including but not limited to polymeric materials or other organic or inorganic additives can be added to any or all of the layers of the autoclavable multilayer film as needed, and additional film layers can be included either within the film structure, or adhered to an outer layer thereof.

One or more layers of the film may contain a blend of two or more polymeric components, and/or a polymeric component blended with other additives. Blend can be made via dry blending followed by passing the overall composition through a compounding extruder. Alternatively, the components can be fed directly to a mixing device such as a compounding extruder, high shear continuous mixer, two roll mill or an internal mixer such as a Banbury mixer. It is also possible to achieve melt mixing in an extruder section of a coextrusion apparatus. Overall, the objective is to obtain a uniform dispersion of all ingredients, which can be achieved by inducing sufficient shear and heat to cause the plastics component(s) to melt. However, the time and temperature of mixing should be controlled to avoid molecular weight degradation.

Films can be produced by various methods, including (but are not limited to) tubular cast coextrusion (e.g., per U.S. Pat. No. 4,551,380 to Schoenberg), flat cast extrusion, extrusion coating, and adhesive lamination. For example, a multilayer autoclavable film can be formed by cast coextrusion as a tubular film. Packaging articles can be made directly from the coextruded, tubular film. A hot blown process can also be used to make the film. When the total film thickness is 4 mils or less, a hot blown process is generally preferred. On the other hand, when the total film thickness is greater than 4 mils, a cast coextrusion process is generally preferred. Other processes, such as extrusion coating, conventional lamination, and slot die extrusion, etc., can also be used to make the disclosed multilayer film, although these alternative processes can be more difficult or less efficient than flat cast coextrusion, hot blown coextrusion, and tubular cast coextrusion.

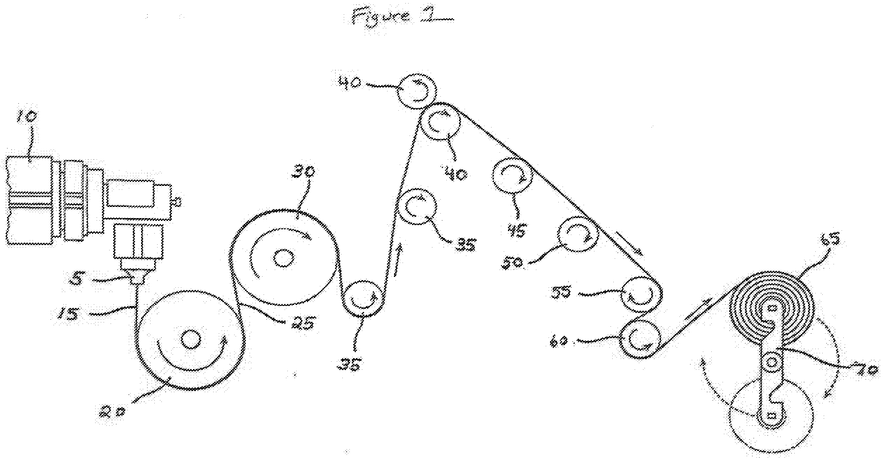

The autoclavable films of the examples disclosed herein were made by the flat cast film production process illustrated in Figure 1. Particularly, Figure 1 illustrates a schematic view of a cast coextrusion process of film manufacture, wherein various polymeric formulations are supplied to slot-shaped die **5** from one or more extruders **10,** only one of which is illustrated in Figure 1. In some embodiments, 3 to 10 extruders is used. In some embodiments, the number of extruders **10** can be at least as great at the number of different chemical compositions present in the various layers of the autoclavable multilayer film. However, in some embodiments, the number of extruders **10** can be fewer than the number of layers of the film in the event that a stream from an extruder is split to form two different film layers. In some embodiments, the extruders can be single screw extruders that convert polymer granules or pellets into a continuous uniform melt under elevated temperatures and pressure.

The molten masses formed within the various extruders converge into a plurality of layers in a stream that is forced into flat laminar flow for the width of the slot of die **5,** and thereafter forced thought the slot of die **5** to yield the desired shape. After passing through the slot of die **5,** melt **15** passes downward vertically and tangentially contacts chill roll **20** which quenches melt **15,** forming multilayer film **25** thereon. In some embodiments, chill roll **20** is highly polished and water-cooled, and rotates with melt **15** at the speed at which melt **15,** and film **25,** are drawn forward. Film **25** then leaves the surface of chill roll **20,** and thereafter can contact the surface of from one to three supplemental chill rolls **30** (only one supplemental chill roll **30** is illustrated in Figure 1) which are also water-cooled and highly polished, and which further cool multilayer film **25,** which thereafter passes over guide rolls **35** and through the nip of nip rolls 40. Film **25** is thereafter directed over guide rolls **45** and **50.** Thereafter, film **25** passes between a nip between rubber nip roll **55** and stainless steel nip roll **60,** and is then wound up into roll **65** by winder **70.**

The width of the cast film web can be determined by the die slot width. The thickness of film **25** can be determined by the relationship between the output of extruder **10** and the takeaway speed of film **25.**

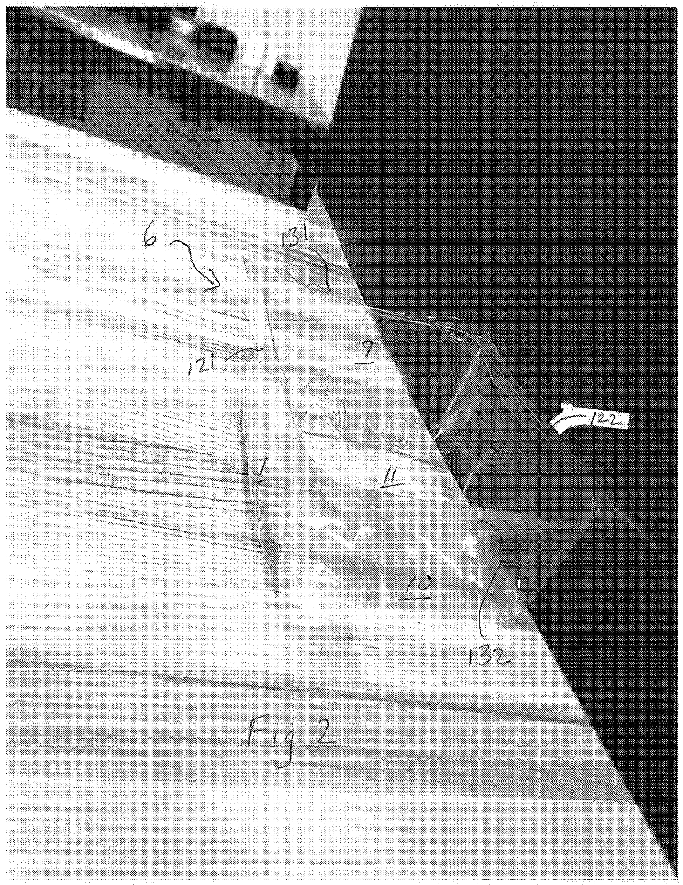

Figure 2 is a perspective view of a thermoformed autoclavable pouch **6** having bottom **11,** side walls **7** and **8,** end walls **9** and **10,** side flanges **121** and **122,** and end flanges **131** and **132.** A product to be autoclaved is placed inside the pouch, and an autoclavable flat lid film (not illustrated) is thereafter sealed to the side and end flanges to seal the product inside the pouch.

Packaging articles made from the autoclavable film, including the thermoformed pouch such illustrated in Figure 2, can be used for the packaging of meat products, including bone-in meat products. The pouch can be small, i.e., with a pocket from 0.5 to 4 inches wide, and from 5 to 10 inches long. However, the autoclavable pouch may be of any desired size and shape. For example, the flexible pouches are generally rectangular in shape with rounded corners and having dimensions of about 180 mm wide by 350 mm long. It is to be appreciated that square corners and shapes other than rectangular can be produced and that such other shapes, corner geometries and sizes can be made.

The autoclavable film, packaging article comprising same, and autoclaving process using same is based upon the surprising discovery that the multilayer autoclavable film is able to survive the sterility conditions imposed in order to sterilize the packaged product. The packaging article maintained its flexibility and toughness over a wide range of temperatures, and not exhibit flex cracking as a result of the autoclaving process. The package was functional and resisted distortion at high temperatures to withstand the heat of steam sterilization, a process many retort containers are subjected to prior to shipment. Although prior art crosslinked films have been used for making autoclavable packages, the autoclaving film disclosed herein can undergo sterilization conditions without requiring crosslinking prior thereto. As a result, the autoclaving film disclosed herein does not comprise a crosslinked polymer network.

The autoclavable film can be used to package a wide variety of products, including (but not limited to) food products (including meat), medical products and devices, electronic products, etc. Such products can include (but are not limited to) agricultural, industrial non-food, industrial overwrap, medical, retail consumer, food packaging, home, industrial, and construction, among other uses. Where the product being packaged is then desired to be sterilized, it can be subjected to suitable conditions by subjecting the entire package to an elevated temperature (such as, for example, in an autoclave) for a time sufficient to effectuate the degree of sterilization desired.

Pouches made from the autoclavable multilayer films can have a wide variety of applications. For example, such pouches are used to hold meat products, low viscosity fluids (*e.g.,* juice and soda), high viscosity fluids (*e.g*., condiments and sauces), fluid/solid mixtures (*e.g*., soups), gels, powders, and the like. The benefit of such pouches lies, at least in part, in the fact that such pouches are easy to store prior to filling and produce very little waste when discarded. The pouches can be formed into a variety of sizes and shapes.

A thermoformed retort pouch and lid, each made from the autoclavable multilayer film, are useful for packaging food products to be autoclaved. In many institutions such as hospitals, military, and schools, large retort pouches and sealed plastic food packages have potential applications. In some embodiments, the retort pouch is flexible, yet has sufficient toughness and impact strength to enable the container to withstand severe abuse testing in accordance with industry shipping standards.

In some embodiments, the autoclavable packaging article is capable of withstanding sterilization at temperatures in the range of about 121°C for about 2 hours to kill undesirable microorganism growth.

All compositional percentages used herein are presented on a "by weight" basis unless designated otherwise.

**Table 1: Resins and Other Materials Used in Films of Examples**

| Material Identity | Trade name | Generic Name | Melting Point (°C) ASTM D3418 | Supplier |
|---|---|---|---|---|
| ssEt/C₆ | EXCEED 1012HJ | homogeneous et/24exane copolymer | 115 | ExxonMobil |
| ssEt/Cs | AFFINITY EG 8100 G1 | homogeneous et/octene copolymer | 55 | Dow |
| zEt/C₆ | CV77528 | heterogeneous et/24exane copolymer | 121.8 | Westlake Chemical |
| HDPE-1 | EL-Lene H377C | Homopolymer HDPE | 133 | SCG Chemicals Thailand |
| HDPE-2 | SURPASS HPs667-AB | High density polyethylene | 133 | Nova Chemicals |
| PP-1 | PP3155 | propylene homopolymer | 133 | ExxonMobil |
| PP-2 | MOPLEN HP462S | propylene homopolymer | 133 | Lyondell Basell |
| Pr/Et-1 | BRASKEM DS6D82 | homogeneous Pr/Et copolymer | 137.6 | Braskem |
| Pr/Et-2 | BORPURE RD208CF | Propylene/ethylene copolymer | 138-142 | Borealis |
| COC-1 | TOPAS 8007F-04 | ethylene/norbornene copolymer (36% comonomer) | Tg=80 | Topas Advanced Polymers |
| COC-2 | TOPAS 5013X14 | cyclic olefin copolymer | Tg=134 | Topas Advanced Polymers |
| EVA | ESCORENE ULTRA LD 761.36 | ethylene/vinyl acetate copolymer (27wt% vinyl acetate) | 73 | ExxonMobil |
| EMA | LOTRYL 24MA02N | ethylene/methyl acrylate copolymer (>20% methyl acrylate; 0.9 g/cc) | 80 | Arkema |
| PVDCM A-1 | XU32019 | vinylidene chloride/methyl acrylate copolymer (6wt% MA) | 158 | Dow |
| PVDCM A-2 | XUR32147 | vinylidene chloride/methyl acrylate copolymer | 162 | Dow |
| PVDCV C | PV708 | PVDC-VC | 148 | Solvay |
| WCC-1 | LW1006 | White color concentrate in polypropylene | 133 | Color Matrix |
| WCC-2 | 11853 | White color concentrate (TiO₂ in LLDPE) | 120 | Ampacet |
| WCC-3 | 11343K | White masterbatch in LLDPE | 120 | Ampacet |
| BCC | 191029 | Black color concentrate (carbon black in LLDPE) | 120 | Ampacet |

**Table 2: Autoclavable Films 1-16 (Reference Examples)**

| Film Identity | Seal | 3^{rd} Tie | 1^{st} Tie | Barrier | 2^{nd} Tie | 4^{th} Tie | Skin |
|---|---|---|---|---|---|---|---|
| Film 1 | Pr/Et-1 | Pr/Et-1 | EMA | PVDCMA-1 | EMA | Pr/Et-1 | Pr/Et-1 |
| | [80% | [50%] | | | | [50%] | |
| | zEt/C₆ | ssEt/Cs | | | | ssEt/Cs | |
| | [20%] | [50%] | | | | [50%] | |
| Mils | 1.0 | 0.5 | 0.5 | 1.0 | 0.5 | 0.5 | 1.0 |
| Film 2 | Pr/Et-1 | Pr/Et-1 | EMA | PVDCMA-1 | EMA | Pr/Et-1 | Pr/Et-1 |
| | [80% | [50%] | | | | [50%] | [85] |
| | zEt/C₆ | ssEt/Cs | | | | ssEt/Cs | WCC-2 |
| | [20%] | [33%] | | | | [35%] | [15] |
| | | WCC-2 | | | | WCC-2 | |
| | | [15] | | | | [15] | |
| | | BCC | | | | | |
| | | [02] | | | | | |
| Mils | 1.0 | 0.5 | 0.5 | 1.0 | 0.5 | 0.5 | 1.0 |
| Film 3 | Pr/Et-1 | Pr/Et-1 | EMA | PVDCMA-1 | EMA | Pr/Et-1 | Pr/Et-1 |
| | [80% | [50%] | | | | [50%] | [70] |
| | zEt/C₆ | ssEt/Cs | | | | ssEt/Cs | WCC-2 |
| | [20%] | [33%] | | | | [35%] | [15] |
| | | WCC-2 | | | | WCC-2 | COC-1 |
| | | [15] | | | | [15] | [15] |
| | | BCC | | | | | |
| | | [02] | | | | | |
| Mils | 1.0 | 0.5 | 0.5 | 1.0 | 0.5 | 0.5 | 1.0 |
| Film 4 | Pr/Et-1 | Pr/Et-1 | EMA | PVDCMA-1 | EMA | Pr/Et-1 | PP-1 |
| | [80% | [50%] | | | | [50%] | [70] |
| | zEt/C₆ | ssEt/Cs | | | | ssEt/Cs | WCC-2 |
| | [20%] | [33%] | | | | [35%] | [15] |
| | | WCC-2 | | | | WCC-2 | COC-1 |
| | | [15] | | | | [15] | [15] |
| | | BCC | | | | | |
| | | [02] | | | | | |
| Mils | 1.0 | 0.5 | 0.5 | 1.0 | 0.5 | 0.5 | 1.0 |
| Film 5 | Pr/Et-1 | PR/ET -1 | EMA | PVDCMA-1 | EMA | Pr/Et-1 | Pr/Et-1 |
| | [70%] | [50%] | | | | [50%] | [45] |
| | zEt/C₆ | ssEt/Cs | | | | ssEt/Cs | WCC-1 |
| | [15%] | [33%] | | | | [35%] | [25] |
| | COC-2 | WCC-2 | | | | WCC-2 | COC-2 |
| | [15%] | [15] | | | | [15] | [30] |
| | | BCC | | | | | |
| | | [02] | | | | | |
| Mils | 1.0 | 0.5 | 0.5 | 1.0 | 0.5 | 0.5 | 1.0 |
| Film 6A | Pr/Et-1 | PR/ET -1 | EMA | PVDCMA-1 | EMA | Pr/Et-1 | PP-1 |
| | [70%] | [50%] | | | | [50%] | [45] |
| | zEt/C₆ | ssEt/Cs | | | | ssEt/Cs | WCC-1 |
| | [15%] | [33%] | | | | [35%] | [25] |
| | COC-2 | WCC-2 | | | | WCC-2 | COC-2 |
| | [15%] | [15] | | | | [15] | [30] |
| | | BCC | | | | | |
| | | [02] | | | | | |
| Mils | 1.0 | 0.5 | 0.5 | 1.0 | 0.5 | 0.5 | 1.0 |
| Film 7 | Pr/Et-1 | Pr/Et-1 | EMA | PVDCMA-1 | EMA | Pr/Et-1 | COC-2 |
| | [70%] | [50%] | | | | [50%] | [45] |
| | zEt/C₆ | ssEt/Cs | | | | ssEt/Cs | WCC-1 |
| | [15%] | [33%] | | | | [35%] | [25] |
| | COC-2 | WCC-2 | | | | WCC-2 | HDPE-2 |
| | [15%] | [15] | | | | [15] | [30] |
| | | BCC | | | | | |
| | | [02] | | | | | |
| Mils | 1.0 | 0.5 | 0.5 | 1.0 | 0.5 | 0.5 | 1.0 |
| Film 8 | Pr/Et-1 | Pr/Et-1 | EMA | PVDCMA-1 | EMA | Pr/Et-1 | PP-1 |
| | [70%] | [50%] | | | | [50%] | [45] |
| | zEt/C₆ | ssEt/Cs | | | | ssEt/Cs | WCC-1 |
| | [15%] | [33%] | | | | [35%] | [25] |
| | COC-2 | WCC-2 | | | | WCC-2 | COC-2 |
| | [15%] | [15] | | | | [15] | [30] |
| | | BCC | | | | | |
| | | [02] | | | | | |
| Mils | 1.0 | 0.4 | 0.4 | 0.9 | 0.4 | 0.4 | 0.50 |
| Film 9 | Pr/Et-1 | Pr/Et-1 | EMA | PVDCMA-1 | EMA | Pr/Et-1 | PP-1 |
| | [70%] | [50%] | | | | [50%] | [45] |
| | zEt/C₆ | ssEt/Cs | | | | ssEt/Cs | WCC-1 |
| | [15%] | [33%] | | | | [35%] | [25] |
| | COC-2 | WCC-2 | | | | WCC-2 | COC-2 |
| | [15%] | [15] | | | | [15] | [30] |
| | | BCC | | | | | |
| | | [02] | | | | | |
| Mils | 1.0 | 0.3 | 0.3 | 0.7 | 0.3 | 0.3 | 0.40 |
| Film 10 | Pr/Et-1 | Pr/Et-1 | EMA | PVDCMA- | EMA | Pr/Et-1 | COC-2 |
| | [70%] | [50%] | | 1 | | [50%] | [45] |
| | zEt/C₆ | ssEt/Cs | | | | ssEt/Cs | WCC-1 |
| | [15%] | [33%] | | | | [35%] | [25] |
| | COC-2 | WCC-2 | | | | WCC-2 | HDPE-2 |
| | [15%] | [15] | | | | [15] | [30] |
| | | BCC | | | | | |
| | | [02] | | | | | |
| Mils | 1.0 | 0.4 | 0.4 | 0.9 | 0.4 | 0.4 | 0.5 |
| Film 11 | Pr/Et-1 | Pr/Et-1 | EMA | PVDCMA-1 | EMA | Pr/Et-1 | COC-2 |
| | [70%] | [50%] | | | | [50%] | [45] |
| | zEt/C₆ | ssEt/Cs | | | | ssEt/Cs | WCC-1 |
| | [15%] | [33%] | | | | [35%] | [25] |
| | COC-2 | WCC-2 | | | | WCC-2 | HDPE-2 |
| | [15%] | [15] | | | | [15] | [30] |
| | | BCC | | | | | |
| | | [02] | | | | | |
| Mils | 1.0 | 0.3 | 0.3 | 0.7 | 0.3 | 0.3 | 0.4 |
| Film 6B | Pr/Et-1 | Pr/Et-1 | EMA | PVDCMA-1 | EMA | Pr/Et-1 | PP-1 |
| (repeat of | [70%] | [50%] | | | | [50%] | [45] |
| Film 6A) | zEt/C₆ | ssEt/Cs | | | | ssEt/Cs | WCC-1 |
| | [15%] | [33%] | | | | [35%] | [25] |
| | COC-2 | WCC-2 | | | | WCC-2 | COC-2 |
| | [15%] | [15] | | | | [15] | [30] |
| | | BCC | | | | | |
| | | [02] | | | | | |
| Mils | 1.0 | 0.5 | 0.5 | 1.0 | 0.5 | 0.5 | 1.0 |
| Film 12 | Pr/Et-1 | Pr/Et-1 | EMA | PVDCMA-1 | EMA | Pr/Et-1 | PP-1 |
| | [70%] | [50%] | | | | [50%] | [45] |
| | zEt/C₆ | ssEt/Cs | | | | ssEt/Cs | WCC-1 |
| | [15%] | [33%] | | | | [35%] | [25] |
| | COC-2 | WCC-2 | | | | WCC-2 | COC-2 |
| | [15%] | [15] | | | | [15] | [30] |
| | | BCC | | | | | |
| | | [02] | | | | | |
| Mils | 1.3 | 0.3 | 0.3 | 0.8 | 0.3 | 0.3 | 0.70 |
| Film 13 | Pr/Et-1 | Pr/Et-1 | EMA | PVDCMA-1 | EMA | Pr/Et-1 | PP-1 |
| | [60%] | [50%] | | | | [50%] | [45] |
| | zEt/C₆ | ssEt/Cs | | | | ssEt/Cs | WCC-1 |
| | [25%] | [33%] | | | | [35%] | [25] |
| | COC-2 | WCC-2 | | | | WCC-2 | COC-2 |
| | [15%] | [15] | | | | [15] | [30] |
| | | BCC | | | | | |
| | | [02] | | | | | |
| Mils | 1.3 | 0.3 | 0.3 | 0.8 | 0.3 | 0.3 | 0.70 |
| Film 14 | Pr/Et-1 | Pr/Et-1 | EMA | PVDCMA-1 | EMA | Pr/Et-1 | PP-1 |
| | [50%] | [50%] | | | | [50%] | [45] |
| | zEt/C₆ | ssEt/Cs | | | | ssEt/Cs | WCC-1 |
| | [35%] | [33%] | | | | [35%] | [25] |
| | COC-2 | WCC-2 | | | | WCC-2 | COC-2 |
| | [15%] | [15] | | | | [15] | [30] |
| | | BCC | | | | | |
| | | [02] | | | | | |
| Mils | 1.3 | 0.3 | 0.3 | 0.8 | 0.3 | 0.3 | 0.70 |
| Film 15 | Pr/Et-1 | PR/ET -1 | EMA | PVDCMA-2 | EMA | Pr/Et-1 | Pr/Et-1 |
| | [80% | [50%] | | | | [50%] | |
| | zEt/C₆ | ssEt/Cs | | | | ssEt/Cs | |
| | [20%] | [50%] | | | | [50%] | |
| Mils | 1.0 | 0.5 | 0.5 | 1.0 | 0.5 | 0.5 | 1.0 |
| Film 16 | Pr/Et-1 | PR/ET -1 | EMA | PVDCVC | EMA | Pr/Et-1 | Pr/Et-1 |
| | [80% | [50%] | | | | [50%] | |
| | zEt/C₆ | ssEt/Cs | | | | ssEt/Cs | |
| | [20%] | [50%] | | | | [50%] | |
| Mils | 1.0 | 0.5 | 0.5 | 1.0 | 0.5 | 0.5 | 1.0 |

**Table 3: Autoclavable Films 17-20**

| Film Identity | | Seal | 3^{rd} Tie | 1^{st} Tie | Barrier | 2^{nd} Tie | 4^{th} Tie | Skin |
|---|---|---|---|---|---|---|---|---|
| Film 17 | Mils | Pr/Et-2 | Pr/Et-2 | EVA | PVDCMA-1 | EVA | HDPE-1 | HDPE-1 |
| | 3.00 | [70%] | [52%] | | | | | |
| | 75µ | ssEt/C₆ | ssEt/Cs | | | | [50%] | [60%] |
| | | [15%] | [48%] | | | | ssEt/C₈ | COC-2 |
| | | COC-2 | | | | | [50%] | [15%] |
| | | [15%] | | | | | | ssEt/C₆ |
| | | | | | | | | [25%] |
| | Mils | 1.0 | 0.30 | 0.30 | | 0.30 | | |
| | Microns, µ | 25.0 | 7.5 | 7.5 | 0.40 | 7.5 | 0.30 | 0.40 |
| | Vol% | 33.33 | 10.0 | 10.0 | 10.0 | 10.0 | 7.5 | 10.0 |
| | Wt% | 29.78 | 8.61 | 9.25 | 13.33 | 9.25 | 10.0 | 13.33 |
| | SG | 0.918 | 0.885 | 0.95 | 21.80 | 0.95 | 8.88 | 12.43 |
| | | | | | 1.68 | | 0.912 | 0.958 |
| Film 18 | Mils | Pr/Et-2 | Pr/Et-2 | EVA | PVDCMA-1 | EVA | HDPE-1 | HDPE-1 |
| | 3.00 | [70%] | [48%] | | | | | |
| | 75µ | ssEt/C₆ | ssEt/C₈ | | | | [50%] | [45%] |
| | | [15%] | [33%] | | | | ssEt/C₈ | COC-2 |
| | | COC-2 | WCC-2 | | | | [35%] | [15%] |
| | | [15%] | | | | | WCC-2 | ssEt/C₆ |
| | | | [15%] | | | | | [15%] |
| | | | BCC | | | | [15%] | WCC-2 |
| | | | [04%] | | | | | |
| | Mils | 1.0 | | 0.30 | | 0.30 | | [25%] |
| | Microns, µ | 25.0 | 0.30 | 7.5 | 0.40 | 7.5 | | |
| | Vol% | 33.33 | 7.5 | 10.0 | 10.0 | 10.0 | 0.30 | 0.40 |
| | Wt% | 29.01 | 10.0 | 9.01 | 13.33 | 9.01 | 7.5 | 10.0 |
| | SG | 0.918 | 9.06 | 0.95 | 21.24 | 0.95 | 10.0 | 13.33 |
| | | | 0.955 | | 1.68 | | 9.27 | 13.40 |
| | | | | | | | 0.978 | 1.06 |
| Film 19 | Mils | Pr/Et-2 | Pr/Et-2 | EVA | PVDCMA-1 | EVA | HDPE-1 | HDPE-1 |
| | 3.50 | [70%] | [48%] | | | | | |
| | 87.5µ | ssEt/C₆ | ssEt/C₈ | | | | [50%] | [45%] |
| | | [15%] | [33%] | | | | ssEt/C₈ | COC-2 |
| | | COC-2 | WCC-2 | | | | [35%] | [15%] |
| | | [15%] | | | | | WCC-2 | ssEt/C₆ |
| | | | [15%] | | | | | [15%] |
| | | | BCC | | | | [15%] | WCC-2 |
| | | | [04%] | | | | | |
| | Mils | 1.0 | | 0.30 | | 0.30 | | [25%] |
| | Microns, µ | 25.0 | 0.30 | 7.5 | 0.90 | 7.5 | | |
| | Vol% | 28.57 | 7.5 | 8.57 | 22.5 | 8.57 | 0.30 | 0.40 |
| | Wt% | 22.93 | 8.57 | 7.12 | 25.71 | 7.12 | 7.5 | 10.0 |
| | SG | 0.918 | 7.16 | 0.95 | 37.76 | 0.95 | 8.57 | 11.43 |
| | | | 0.955 | | 1.68 | | 7.33 | 10.59 |
| | | | | | | | 0.978 | 1.06 |
| Film 20 | Mils | Pr/Et-2 | Pr/Et-2 | EVA | PVDCMA-1 | EVA | Pr/Et-2 | PP-2 |
| | 3.00 | [70%] | [48%] | | | | [50%] | [60%] |
| | 75µ | ssEt/C₆ | ssEt/C₈ | | | | ssEt/C₈ | ssEt/C₆ |
| | | [15%] | [33%] | | | | [35%] | [15%] |
| | | COC-2 | WCC-2 | | | | WCC-2 | wcc-3 |
| | | [15%] | | | | | | |
| | | | [15%] | | | | [15%] | [25%] |
| | | | BCC | | | | | |
| | | | [04%] | | | | | |
| | Mils | 1.0 | | 0.30 | | 0.30 | | |
| | Microns | 25.0 | 0.30 | 7.5 | 0.40 | 7.5 | 0.30 | 0.40 |
| | Vol% | 33.33 | 7.5 | 10.0 | 10.0 | 10.0 | 7.5 | 10.0 |
| | Wt% | 29.34 | 10.0 | 9.11 | 13.33 | 9.11 | 10.0 | 13.33 |
| | SG | 0.918 | 9.13 | 0.95 | 21.48 | 0.95 | 9.07 | 12.77 |
| | | | 0.952 | | 1.68 | | 0.946 | 0.996 |
| | Suggested Temperatures, °C | 190-230 | 190-230 | 160-180 | 140-160 | 160-180 | 190-230 | 190-230 |
| Film Dimensions: 75 micron x 1000 mm x 3,000m | | | | | | | | |
| Corona treat to 42-44 dynes | | | | | | | | |

**Table 4: Properties of Films 17-20**

| FILM | Ave. Layer Gauge for Coex, µ | OTR, cc/sq.m. atm. day 73°F, @ STP | MVTR g/sq.m, 100%RH, 100°F @STP | Ave. Tensile at Break, psi | Ave. Elongation At Break, % MD | Ave. Youngs Modulus , psi [x1000] |
|---|---|---|---|---|---|---|
| | | | | MD | TD | MD |
| | 1/ 2/ 3/ 4/ 5/ 6/ 7 | Total / 25µ | Total / 25µ | TD | | TD |
| Film No. 17 | 20/9/6/10/6/7/16 | 4.2 | 1.8 | 3,880 | 450 | 94.3 |
| | =∑74 | 1.6 | 0.68 | 2,100 | 520 | 75.8 |
| Film No. 18 | 20/8/6/7/7/8/18 =∑74 | 4.4 | 1.8 | 4,450 | 490 | 98.5 |
| | | 1.1 | 0.50 | 2,730 | 480 | 81.2 |
| Film No. 20 | 19/9/6/6/5/10/21 | 5.5 | 2.2 | 5,020 | 530 | 83.1 |
| | =∑76 | 1.3 | 0.52 | 3,710 | 590 | 79.2 |
| Film No. 18 laminated to biaxially oriented PET | 24/7/6/7/7/7/18 =∑76 | | 1.7 | 6,180 | 69 | 171 |
| | | 3.7 | 0.44 | 6'110 | 82 | 165 |
| | | 0.97 | | | | |
| Film No. 18 laminated to biaxially oriented polyamide 6 | 20/9/8/7/7/10/17 | | 1.6 | 6,640 | 100 | 144 |
| | =∑78 | 4.1 | 0.43 | 8,980 | 59 | 104 |
| | | 1.2 | | | | |
| Film No. 20 laminated to | 20/9/7/8/6/10/11 | | | | 88 | 163 |
| biaxially oriented PET | =∑71 | 4.8 | 1.6 | 6,380 | 78 | 158 |
| | | 1.6 | 0.51 | 5,950 | | |
| Film No. 20 laminated to biaxially oriented polyamide 6 | 20/9/8/7/7/10/17 | | 1.6 | 8,420 | 53 | 105 |
| | =∑78 | 4.8 | 0.43 | 6,640 | 110 | 135 |
| | | 1.3 | | | | |

**Table 5: Films 21-25**

| Film Identity | | Seal | 3^{rd} Tie | 1^{st} Tie | Barrier | 2^{nd} Tie | 4^{th} Tie | Skin |
|---|---|---|---|---|---|---|---|---|
| Film 21 | Control | Pr/Et-1 [70%] | Pr/Et-1 [48%] | EVA | PVDCMA-1 | EVA | HDPE-2 | HDPE-2 [45] |
| | 3.3mils | ssEt/C₆ [15%] | ssEt/C₈ [33%] | | | | [50%] | ssEt/C₆ [15] |
| | | | | | | | ssEt/C₈ [35%] | |
| | | COC-2 [15%] | WCC-2 [15] | | | | | COC-2 [15] |
| | | | | | | | WCC-2 [15] | |
| | | | BCC [04] | | | | | WCC-2 [25] |
| | Mils | 1.0 | 0.3 | 0.3 | 0.7 | 0.3 | 0.3 | 0.40 |
| Film 22 | Sample 1 | Pr/Et-1 [70%] | Pr/Et-1 [41%] | EVA | PVDCMA-1 | EVA | HDPE-2 [45%] | HDPE-2 [45] |
| | 3.3mils | ssEt/C₆ [15%] | ssEt/C₈ [40%] | | | | | ssEt/C₆ [15] |
| | | | | | | | ssEt/C₈ [40%] | |
| | | COC-2 [15%] | WCC-2 [15] | | | | | COC-2 [15] |
| | | | | | | | WCC-2 [15] | |
| | | | BCC [04] | | | | | WCC-2 [25] |
| | Mils | 1.0 | 0.3 | 0.3 | 0.7 | 0.3 | 0.3 | 0.40 |
| Film 23 | Sample 2 | Pr/Et-1 [60%] | Pr/Et-1 [41%] | EVA | PVDCMA-1 | EVA | HDPE-2 [45%] | HDPE-2 [45] |
| | | ssEt/C₆ [25%] | ssEt/C₈ [40%] | | | | | ssEt/C₆ [15] |
| | 3.3mils | | | | | | ssEt/C₈ [40%] | |
| | | COC-2 [15%] | WCC-2 [15] | | | | | COC-2 [15] |
| | | | | | | | WCC-2 [15] | |
| | | | BCC [04] | | | | | WCC-2 [25] |
| | Mils | 1.0 | 0.3 | 0.3 | 0.7 | 0.3 | 0.3 | 0.40 |
| Film 24 | Sample 3 | Pr/Et-1 [60%] | Pr/Et-1 [41%] | EVA | PVDCMA-1 | EVA | HDPE-2 [45%] | HDPE-2 [45] |
| | 3.3mils | ssEt/C₆ [30%] | ssEt/C₈ [40%] | | | | | ssEt/C₆ [15] |
| | | | | | | | ssEt/C₈ [40%] | |
| | | COC-2 [10%] | WCC-2 [15] | | | | | COC-2 [15] |
| | | | | | | | WCC-2 [15] | |
| | | | BCC [04] | | | | | WCC-2 [25] |
| | Mils | 1.0 | 0.3 | 0.3 | 0.7 | 0.3 | 0.3 | 0.40 |
| Film 25 | Sample 4 | Pr/Et-1 [50%] | Pr/Et-1 [41%] | EVA | PVDCMA-1 | EVA | HDPE-2 [45%] | HDPE-2 [45] |
| | 3.3mils | ssEt/C₆ [40%] | ssEt/C₈ [40%] | | | | | ssEt/C₆ [15] |
| | | | | | | | ssEt/C₈ [40%] | |
| | | COC-2 [10%] | WCC-2 [15] | | | | | COC-2 [15] |
| | | | | | | | WCC-2 [15] | |
| | | | BCC [04] | | | | | WCC-2 [25] |
| | | | | | | | | |
| | Mils | 1.0 | 0.3 | 0.3 | 0.7 | 0.3 | 0.3 | 0.40 |

The above films 1-25 were used to make autoclavable pouches. It is noted that films 1-16 and 20 are not covered by the invention. A product was placed in the pouch and subjected to autoclaving by being heated from room temperature to 121°C over a 30 minute period, thereafter held at 121°C for 30 minutes, and thereafter cooled from 121°C back to room temperature over 30 minutes. The films survived autoclaving without flex cracking and without exhibiting any substantial corrugation.

The autoclavable film can be used to make a durable package for packaging bone-in meat for autoclaving, without using high levels of polyethylene terephthalate or polyamide. The presence of cyclic olefin copolymer in the inner film layer is believed to sustain the seal strength during autoclaving. The presence of the COC in the skin layer is believed to assist in preventing the pouches from sticking to the stainless steel racks used in the autoclaving oven. The autoclaving film is a non-crosslinked, ethylene-based film which is not based on polyester or polyamide, and is not a foil-based film, but may comprise a relatively small proportion (based on total film weight) of cyclic olefin copolymer.

Although the multilayer autoclavable film, packaging articles comprising same, and autoclaving process utilizing same, have been described with reference to the preferred embodiments, it is to be understood that modifications and variations can exist without departing from the principles and scope of the described articles and process, as those skilled in the art will readily understand. Accordingly, such modifications are in accordance with the claims set forth below.

## Claims

1. An autoclavable barrier film comprising:
A) a seal layer comprising a first low melt point polyolefin, the first low melt point polyolefin having a melt point less than 121°C, the first low melt point polyolefin making up from 5 to 80 wt % of the seal layer, based on total weight of seal layer, the seal layer being a first outer layer;
B) a skin layer comprising a second low melt point polyolefin, the second low melt point polyolefin having a melt point less than 121°C, the second low melt point polyolefin making up from 5 to 80 wt % of the skin layer based on total weight of the skin layer, the skin layer being a second outer layer;
C) a barrier layer comprising at least one member selected from the group consisting of polyvinylidene chloride, polyamide MXD6/MXDI, polyamide 61/6T;
D) a first tie layer between the seal layer and the barrier layer, the first tie layer comprising a first tie polymer having a melting point less than 121°C, the first tie polymer making up from 50 to 100 wt % of the first tie layer, based on total weight of first tie layer;
E) a second tie layer between the barrier layer and the skin layer, the second tie layer comprising a second tie polymer having a melting point less than 121°C, the second tie polymer making up from 50 to 100 wt % of the second tie layer, based on total weight of the second tie layer,
wherein:
the seal layer further comprises a first cyclic olefin copolymer in an amount of from 5 to 30 wt %, based on total seal layer weight, wherein the cyclic olefin copolymer in the seal layer comprises at least one member selected from the group consisting of ethylene/norbornene copolymer and polynorbornene homopolymer; and
the skin layer further comprises a second cyclic olefin copolymer in an amount of from 5 to 30 wt %, based on total skin layer weight, wherein the cyclic olefin copolymer in the skin layer comprises at least one member selected from the group consisting of ethylene/norbornene copolymer and polynorbornene homopolymer.

2. The autoclavable barrier film according to claim 1, wherein the polyvinylidene chloride comprises at least one member selected from the group consisting of vinylidene chloride/methyl acrylate copolymer and vinylidene chloride/vinyl chloride copolymer, wherein the polyvinylidene chloride is preferably present in an amount of from 90 to 100 wt %, based on total weight of the barrier layer and wherein the film preferably exhibits an oxygen transmission rate of from 0.1 to 10 cm³/100 in² over 24 hr at 0% relative humidity and 23°C, measured in accordance with ASTM D3985-81.

3. The autoclavable barrier film according to any of claims 1-2, wherein:
the seal layer further comprises a first high melt point polyolefin, the first high melt point polyolefin having a melt point greater than 121°C, the first high melt point polyolefin being present in a blend with the first low melt point polyolefin; and
the skin layer further comprises a second high melt point polyolefin, the second high melt point polyolefin having a melt point greater than 121°C, the second high melt point polyolefin being present in a blend with the first low melt point polyolefin and the first high melt point polyolefin.

4. The autoclavable barrier film according to claim 3, wherein:
the seal layer comprises a blend of the first low melt point polyolefin and the first high melt point polyolefin, with the first low melt point polyolefin being present in an amount of from 10 to 65 wt % based on seal layer weight, the first high melt point polyolefin being present in an amount of from 35 to 80 wt % based on seal layer weight; and
the skin layer comprises a blend of the second low melt point polyolefin and the second high melt point polyolefin, with the second low melt point polyolefin being present in an amount of from 10 to 70 wt % based on skin layer weight, the second high melt point polyolefin being present in an amount of from 30 to 75 wt % based on skin layer weight.

5. The autoclavable barrier film according to claim 3, wherein:
the seal layer comprises a blend of the first low melt point polyolefin and the first high melt point polyolefin, with the first low melt point polyolefin being present in an amount of from 15 to 50 wt % based on seal layer weight, the first high melt point polyolefin being present in an amount of from 50 to 70 wt % based on seal layer weight; and
the skin layer comprises a blend of the second low melt point polyolefin and the second high melt point polyolefin, with the second low melt point polyolefin being present in an amount of from 15 to 40 wt % based on skin layer weight, the second high melt point polyolefin being present in an amount of from 45 to 60 wt % based on skin layer weight.

6. The autoclavable film according to any of claims 3-5, wherein
the first low melt point polyolefin comprises at least one member selected from the group consisting of ethylene/butene copolymer, ethylene/hexene copolymer, ethylene/octene copolymer, and ionomer resin;
the first high melt point polyolefin comprises at least one member selected from the group consisting of ethylene/propylene copolymer and high density polyethylene;
the second low melt point polyolefin comprises at least one member selected from the group consisting of ethylene/butene copolymer, ethylene/hexene copolymer, ethylene/octene copolymer, and ionomer resin; and
the first high melt point polyolefin comprises at least one member selected from the group consisting of ethylene/propylene copolymer and high density polyethylene.

7. The autoclavable barrier film according to any of claims 3-6, wherein:
the seal layer comprises a blend of the first low melt point polyolefin, the first high melt point polyolefin, and the first cyclic olefin copolymer, with the first low melt point polyolefin being present in an amount of from 10 to 50 wt % based on seal layer weight, the first high melt point polyolefin being present in an amount of from 35 to 80 wt % based on seal layer weight, and the first cyclic olefin copolymer being present in an amount of from 5 to 25 wt % based on seal layer weight; and
the skin layer comprises a blend of the second low melt point polyolefin, the second high melt point polyolefin, and the second cyclic olefin copolymer, with the second low melt point polyolefin being present in an amount of from 10 to 45 wt % based on skin layer weight, the second high melt point polyolefin being present in an amount of from 30 to 75 wt % based on skin layer weight, and the second cyclic olefin copolymer being present in an amount of from 5 to 25 wt % based on skin layer weight.

8. The autoclavable barrier film according to any of claims 3-7, wherein:
the seal layer comprises a blend of the first low melt point polyolefin, the first high melt point polyolefin, and the first cyclic olefin copolymer, with the first low melt point polyolefin being present in an amount of from 15 to 40 wt % based on seal layer weight, the first high melt point polyolefin being present in an amount of from 50 to 70 wt % based on seal layer weight, and the first cyclic olefin copolymer being present in an amount of from 12 to 18 wt % based on seal layer weight; and
the skin layer comprises a blend of the second low melt point polyolefin, the second high melt point polyolefin, and the second cyclic olefin copolymer, with the second low melt point polyolefin being present in an amount of from 15 to 25 wt % based on skin layer weight, the second high melt point polyolefin being present in an amount of from 45 to 60 wt % based on skin layer weight, and the second cyclic olefin copolymer being present in an amount of from 12 to 18 wt % based on skin layer weight.

9. The autoclavable film according to according to any of claims 1-8, wherein
the first tie polymer comprises at least one member selected from the group consisting of ethylene/unsaturated ester copolymer, ethylene/unsaturated acid copolymer, and anhydride-functional polyolefin, and the first tie layer comprises the first tie polymer in an amount of from 80 to 100 wt %, based on weight of the first tie layer; and
the second tie polymer comprises at least one member selected from the group consisting of ethylene/unsaturated ester copolymer, ethylene/unsaturated acid copolymer, anhydride-functional polyolefin, and the second tie layer comprises the second tie polymer in an amount of from 80 to 100 wt %, based on weight of the first tie layer.

10. The autoclavable film according to any of claims 1-9, further comprising:
F) a third tie layer between the first tie layer and the seal layer, the third tie layer comprising a third tie polymer having a melting point less than 121°C, wherein the third tie polymer comprises a first ethylene/alpha-olefin copolymer having a density ≤ 0.90 g/cm³, the third tie polymer making up from 10 to 80 wt %, based on total layer weight; and
G) a fourth tie layer between the second tie layer and the skin layer, the fourth tie layer comprising a fourth tie polymer having a melting point less than 121°C, wherein the fourth tie polymer comprises a second ethylene/alpha-olefin copolymer having a density ≤ 0.90 g/cm³, the fourth tie polymer making up from 10 to 80 wt %, based on total layer weight.

11. The autoclavable film according to according to any of claims 1-10, wherein the film has a thickness of from 76 to 254 µm (3 to 10 mils).

12. The autoclavable film according to according to any of claims 1-11, wherein the film does not comprises a crosslinked polymer network.

13. An autoclavable packaging article comprising an autoclavable barrier film comprising:
A) a seal layer comprising a first low melt point polyolefin, the first low melt point polyolefin having a melt point less than 121°C, the first low melt point polyolefin making up from 5 to 80 wt % of the seal layer, based on total weight of seal layer, the seal layer being a first outer layer;
B) a skin layer comprising a second low melt point polyolefin, the second low melt point polyolefin having a melt point less than 121°C, the second low melt point polyolefin making up from 5 to 80 wt % of the skin layer based on total weight of the skin layer, the skin layer being a second outer layer;
C) a barrier layer comprising at least one member selected from the group consisting of polyvinylidene chloride, polyamide MXD6/MXDI, polyamide 61/6T;
D) a first tie layer between the seal layer and the barrier layer, the first tie layer comprising a first tie polymer having a melting point less than 121°C, the first tie polymer making up from 50 to 100 wt % of the first tie layer, based on total weight of first tie layer; and
E) a second tie layer between the barrier layer and the skin layer, the second tie layer comprising a second tie polymer having a melting point less than 121°C, the second tie polymer making up from 50 to 100 wt % of the second tie layer, based on total weight of the second tie layer;
wherein:
the seal layer further comprises a first cyclic olefin copolymer in an amount of from 5 to 30 wt %, based on total seal layer weight, wherein the cyclic olefin copolymer in the seal layer comprises at least one member selected from the group consisting of ethylene/norbornene copolymer and polynorbornene homopolymer; and
the skin layer further comprises a second cyclic olefin copolymer in an amount of from 5 to 30 wt %, based on total skin layer weight, wherein the cyclic olefin copolymer in the skin layer comprises at least one member selected from the group consisting of ethylene/norbornene copolymer and polynorbornene homopolymer
and wherein the packaging article is a member selected from the group consisting of lidded thermoformed pouch, end seal bag, side-seal bag, L-seal bag, U-sealed bag, and form-fill-seal pouch.

14. A method of preparing a retorted packaged product, the comprising:
A) placing a product in a packaging article comprising a member selected from the consisting of thermoformed pouch, end seal bag, side-seal bag, L-seal bag, U-sealed bag, and form-fill-seal pouch, the packaging article comprising a multilayer film comprising:
i) a seal layer comprising a first low melt point polyolefin, the first low melt point polyolefin having a melt point less than 121°C, the first low melt point polyolefin making up from 5 to 80 wt % of the seal layer, based on total weight of seal layer, the seal layer being a first outer layer;
ii) a skin layer comprising a second low melt point polyolefin, the second low melt point polyolefin having a melt point less than 121°C, the second low melt point polyolefin making up from 5 to 80 wt % of the skin layer based on total weight of the skin layer, the skin layer being a second outer layer;
iii) a barrier layer comprising at least one member selected from the group consisting of polyvinylidene chloride, polyamide MXD6/MXDI, and polyamide 61/6T;
iv) a first tie layer between the seal layer and the barrier layer, the first tie layer comprising a first tie polymer having a melting point less than 121°C, the first tie polymer making up from 50 to 100 wt % of the first tie layer, based on total weight of first tie layer; and
v) a second tie layer between the barrier layer and the skin layer, the second tie layer comprising a second tie polymer having a melting point less than 121°C, the second tie polymer making up from 50 to 100 wt % of the second tie layer, based on total weight of the second tie layer;
wherein:
the seal layer further comprises a first cyclic olefin copolymer in an amount of from 5 to 30 wt %, based on total seal layer weight, wherein
the cyclic olefin copolymer in the seal layer comprises at least one member selected from the group consisting of ethylene/norbornene copolymer and polynorbornene homopolymer; and
the skin layer further comprises a second cyclic olefin copolymer in an amount of from 5 to 30 wt %, based on total skin layer weight, wherein
the cyclic olefin copolymer in the skin layer comprises at least one member selected from the group consisting of ethylene/norbornene copolymer and polynorbornene homopolymer;
B) sealing the article closed such that the product is surrounded by the multilayer packaging film; and
C) heating the packaged product to a temperature of at least about 121°C for at least 30 minutes.

## Patentansprüche

1. Autoklavierbare Barrierefolie, die
A) eine Siegelschicht, die ein erstes Polyolefin mit niedrigem Schmelzpunkt umfasst, wobei das erste Polyolefin mit niedrigem Schmelzpunkt einen Schmelzpunkt von weniger als 121 °C aufweist, wobei das erste Polyolefin mit niedrigem Schmelzpunkt 5 bis 80 Gew.-% der Siegelschicht ausmacht, bezogen auf das Gesamtgewicht der Siegelschicht, wobei die Siegelschicht eine erste Außenschicht ist;
B) eine Hautschicht, die ein zweites Polyolefin mit niedrigem Schmelzpunkt umfasst, wobei das zweite Polyolefin mit niedrigem Schmelzpunkt einen Schmelzpunkt von weniger als 121 °C aufweist, wobei das zweite Polyolefin mit niedrigem Schmelzpunkt 5 bis 80 Gew.-% der Hautschicht ausmacht, bezogen auf das Gesamtgewicht der Hautschicht, wobei die Hautschicht eine zweite Außenschicht ist;
C) eine Barriereschicht, die mindestens ein Mitglied aus der Gruppe bestehend aus Polyvinylidenchlorid, Polyamid MXD6/MXDI, Polyamid 6I/6T umfasst;
D) eine erste Verbindungsschicht zwischen der Siegelschicht und der Barriereschicht, wobei die erste Verbindungsschicht ein erstes Verbindungspolymer mit einem Schmelzpunkt von weniger als 121°C umfasst, wobei das erste Verbindungspolymer 50 bis 100 Gew.-% der ersten Verbindungsschicht ausmacht, bezogen auf das Gesamtgewicht der ersten Verbindungsschicht; und
E) eine zweite Verbindungsschicht zwischen der Barriereschicht und der Hautschicht umfasst, wobei die zweite Verbindungsschicht ein zweites Verbindungspolymer mit einem Schmelzpunkt von weniger als 121°C umfasst, wobei das zweite Verbindungspolymer 50 bis 100 Gew.-% der zweiten Verbindungsschicht ausmacht, bezogen auf das Gesamtgewicht der zweiten Bindungsschicht;
wobei:
die Siegelschicht ferner ein erstes Cycloolefin-Copolymer in einer Menge von 5 bis 30 Gew.-%, bezogen auf das Gesamtgewicht der Siegelschicht, umfasst, wobei das Cycloolefin-Copolymer in der Siegelschicht mindestens ein Mitglied aus der Gruppe bestehend aus Ethylen/Norbornen-Copolymer und Polynorbornen-Homopolymer umfasst;
und
die Hautschicht ferner ein zweites Cycloolefin-Copolymer in einer Menge von 5 bis 30 Gew.-%, bezogen auf das Gesamtgewicht der Hautschicht, umfasst, wobei das Cycloolefin-Copolymer in der Hautschicht mindestens ein Mitglied aus der Gruppe bestehend aus Ethylen/Norbornen-Copolymer und Polynorbornen-Homopolymer, umfasst.

2. Autoklavierbare Barrierefolie nach Anspruch 1, wobei das Polyvinylidenchlorid mindestens ein Mitglied ausgewählt aus der Gruppe bestehend aus Vinylidenchlorid/Methylacrylat-Copolymer und Vinylidenchlorid/Vinylchlorid-Copolymer umfasst, wobei das Polyvinylidenchlorid vorzugsweise in einer Menge von 90 bis 100 Gew.-%, bezogen auf das Gesamtgewicht der Barriereschicht, vorhanden ist und wobei die Folie vorzugsweise eine Sauerstoffdurchlässigkeit von 0,1 bis 10 cm³/100 in² über 24 Stunden bei 0 % relativer Luftfeuchtigkeit und 23 °C, gemessen gemäß ASTM D3985-81, aufweist.

3. Autoklavierbare Barrierefolie nach einem der Ansprüche 1 bis 2, wobei
die Siegelschicht ferner ein erstes Polyolefin mit hohem Schmelzpunkt umfasst, wobei das erste Polyolefin mit hohem Schmelzpunkt einen Schmelzpunkt von mehr als 121 °C aufweist, wobei das erste Polyolefin mit hohem Schmelzpunkt in einem Gemisch mit dem ersten Polyolefin mit niedrigem Schmelzpunkt vorliegt; und
die Hautschicht ferner ein zweites Polyolefin mit hohem Schmelzpunkt umfasst, wobei das zweite Polyolefin mit hohem Schmelzpunkt einen Schmelzpunkt von mehr als 121 °C aufweist und das zweite Polyolefin mit hohem Schmelzpunkt in einem Gemisch mit dem ersten Polyolefin mit niedrigem Schmelzpunkt und dem ersten Polyolefin mit hohem Schmelzpunkt vorliegt.

4. Autoklavierbare Barrierefolie nach Anspruch 3, wobei
die Siegelschicht ein Gemisch aus dem ersten Polyolefin mit niedrigem Schmelzpunkt und dem ersten Polyolefin mit hohem Schmelzpunkt umfasst, wobei das erste Polyolefin mit niedrigem Schmelzpunkt in einer Menge von 10 bis 65 Gew.-%, bezogen auf das Gewicht der Siegelschicht, und das erste Polyolefin mit hohem Schmelzpunkt in einer Menge von 35 bis 80 Gew.-%, bezogen auf das Gewicht der Siegelschicht, vorhanden ist; und
die Hautschicht ein Gemisch aus dem zweiten Polyolefin mit niedrigem Schmelzpunkt und dem zweiten Polyolefin mit hohem Schmelzpunkt umfasst, wobei das zweite Polyolefin mit niedrigem Schmelzpunkt in einer Menge von 10 bis 70 Gew.-%, bezogen auf das Gewicht der Hautschicht, und das zweite Polyolefin mit hohem Schmelzpunkt in einer Menge von 30 bis 75 Gew.-%, bezogen auf das Gewicht der Hautschicht, vorhanden ist.

5. Autoklavierbare Barrierefolie nach Anspruch 3, wobei
die Siegelschicht ein Gemisch aus dem ersten Polyolefin mit niedrigem Schmelzpunkt und dem ersten Polyolefin mit hohem Schmelzpunkt umfasst, wobei das erste Polyolefin mit niedrigem Schmelzpunkt in einer Menge von 15 bis 50 Gew.-%, bezogen auf das Gewicht der Siegelschicht, und das erste Polyolefin mit hohem Schmelzpunkt in einer Menge von 50 bis 70 Gew.-%, bezogen auf das Gewicht der Siegelschicht, vorhanden ist; und
die Hautschicht ein Gemisch aus dem zweiten Polyolefin mit niedrigem Schmelzpunkt und dem zweiten Polyolefin mit hohem Schmelzpunkt umfasst, wobei das zweite Polyolefin mit niedrigem Schmelzpunkt in einer Menge von 15 bis 40 Gew.-%, bezogen auf das Gewicht der Hautschicht, und das zweite Polyolefin mit hohem Schmelzpunkt in einer Menge von 45 bis 60 Gew.-%, bezogen auf das Gewicht der Hautschicht, vorhanden ist.

6. Autoklavierbare Folie nach einem der Ansprüche 3-5, wobei
das erste Polyolefin mit niedrigem Schmelzpunkt mindestens ein Mitglied aus der Gruppe bestehend aus Ethylen/Buten-Copolymer, Ethylen/Hexen-Copolymer, Ethylen/Octen-Copolymer und Ionomerharz umfasst;
das erste Polyolefin mit hohem Schmelzpunkt mindestens ein Mitglied aus der Gruppe bestehend aus Ethylen/Propylen-Copolymer und Polyethylen hoher Dichte umfasst;
das zweite Polyolefin mit niedrigem Schmelzpunkt mindestens ein Mitglied aus der Gruppe bestehend aus Ethylen/Buten-Copolymer, Ethylen/Hexen-Copolymer, Ethylen/Octen-Copolymer und Ionomerharz umfasst; und
das erste Polyolefin mit hohem Schmelzpunkt mindestens ein Mitglied aus der Gruppe bestehend aus Ethylen/Propylen-Copolymer und Polyethylen hoher Dichte umfasst.

7. Autoklavierbare Barrierefolie nach einem der Ansprüche 3-6, wobei:
die Siegelschicht ein Gemisch aus dem ersten Polyolefin mit niedrigem Schmelzpunkt, dem ersten Polyolefin mit hohem Schmelzpunkt und dem ersten Cycloolefin-Copolymer umfasst, wobei das erste Polyolefin mit niedrigem Schmelzpunkt in einer Menge von 10 bis 50 Gew.-%, bezogen auf das Gewicht der Siegelschicht, das erste Polyolefin mit hohem Schmelzpunkt in einer Menge von 35 bis 80 Gew.-%, bezogen auf das Gewicht der Siegelschicht, und das erste Cycloolefin-Copolymer in einer Menge von 5 bis 25 Gew.-%, bezogen auf das Gewicht der Siegelschicht, vorhanden ist; und
die Hautschicht ein Gemisch des zweiten Polyolefins mit niedrigem Schmelzpunkt, des zweiten Polyolefins mit hohem Schmelzpunkt und des zweiten Cycloolefin-Copolymers umfasst, wobei das zweite Polyolefin mit niedrigem Schmelzpunkt in einer Menge von 10 bis 45 Gew.-%, bezogen auf das Gewicht der Hautschicht, das zweite Polyolefin mit hohem Schmelzpunkt in einer Menge von 30 bis 75 Gew.-%, bezogen auf das Gewicht der Hautschicht, und das zweite Cycloolefin-Copolymer in einer Menge von 5 bis 25 Gew.-%, bezogen auf das Gewicht der Hautschicht, vorhanden ist.

8. Autoklavierbare Barrierefolie nach einem der Ansprüche 3-7, wobei:
die Siegelschicht ein Gemisch aus dem ersten Polyolefin mit niedrigem Schmelzpunkt, dem ersten Polyolefin mit hohem Schmelzpunkt und dem ersten Cycloolefin-Copolymer umfasst, wobei das erste Polyolefin mit niedrigem Schmelzpunkt in einer Menge von 15 bis 40 Gew.-%, bezogen auf das Gewicht der Siegelschicht, vorhanden ist, das erste Polyolefin mit hohem Schmelzpunkt in einer Menge von 50 bis 70 Gew.-%, bezogen auf das Gewicht der Siegelschicht, vorhanden ist und das erste Cycloolefin-Copolymer in einer Menge von 12 bis 18 Gew.-%, bezogen auf das Gewicht der Siegelschicht, vorhanden ist; und
die Hautschicht ein Gemisch aus dem zweiten Polyolefin mit niedrigem Schmelzpunkt, dem zweiten Polyolefin mit hohem Schmelzpunkt und dem zweiten Cycloolefin-Copolymer umfasst, wobei das zweite Polyolefin mit niedrigem Schmelzpunkt in einer Menge von 15 bis 25 Gew.-%, bezogen auf das Gewicht der Hautschicht, das zweite Polyolefin mit hohem Schmelzpunkt in einer Menge von 45 bis 60 Gew.-%, bezogen auf das Gewicht der Hautschicht, und das zweite Cycloolefin-Copolymer in einer Menge von 12 bis 18 Gew.-%, bezogen auf das Gewicht der Hautschicht, vorhanden ist.

9. Autoklavierbare Folie nach einem der Ansprüche 1 bis 8, wobei
das erste Verbindungspolymer mindestens ein Mitglied aus der Gruppe bestehend aus Ethylen/ungesättigtem Ester-Copolymer, Ethylen/ungesättigter Säure-Copolymer und anhydridfunktionellem Polyolefin umfasst und die erste Verbindungsschicht das erste Verbindungspolymer in einer Menge von 80 bis 100 Gew.-%, bezogen auf das Gewicht der ersten Verbindungsschicht, umfasst; und
das zweite Verbindungspolymer mindestens ein Mitglied aus der Gruppe bestehend aus Ethylen/ungesättigtem Ester-Copolymer, Ethylen/ungesättigter Säure-Copolymer und anhydridfunktionellem Polyolefin umfasst und die zweite Verbindungsschicht das zweite Verbindungspolymer in einer Menge von 80 bis 100 Gew.-%, bezogen auf das Gewicht der ersten Bindungsschicht, umfasst.

10. Autoklavierbare Folie nach einem der Ansprüche 1 bis 9, die ferner
F) eine dritte Verbindungsschicht zwischen der ersten Verbindungsschicht und der Siegelschicht, wobei die dritte Verbindungsschicht ein drittes Verbindungspolymer mit einem Schmelzpunkt von weniger als 121°C umfasst, wobei das dritte Verbindungspolymer ein erstes Ethylen/alpha-Olefin-Copolymer mit einer Dichte ≤ 0,90 g/cm³ umfasst, wobei das dritte Verbindungspolymer 10 bis 80 Gew.-%, bezogen auf das Gesamtschichtgewicht, ausmacht; und
G) eine vierte Verbindungsschicht zwischen der zweiten Verbindungsschicht und der Hautschicht umfasst, wobei die vierte Verbindungsschicht ein viertes Verbindungspolymer mit einem Schmelzpunkt von weniger als 121°C umfasst, wobei das vierte Verbindungspolymer ein zweites Ethylen/alpha-Olefin-Copolymer mit einer Dichte ≤ 0,90 g/cm³ umfasst und das vierte Verbindungspolymer 10 bis 80 Gew.-%, bezogen auf das Gesamtgewicht der Schicht, ausmacht.

11. Autoklavierbare Folie nach einem der Ansprüche 1-10, wobei die Folie eine Dicke von 76 bis 254 µm (3 bis 10 mils) aufweist.

12. Autoklavierbare Folie nach einem der Ansprüche 1-11, wobei die Folie kein vernetztes Polymernetzwerk aufweist.

13. Autoklavierbarer Verpackungsartikel, der eine autoklavierbare Barrierefolie umfasst, die
A) eine Siegelschicht, die ein erstes Polyolefin mit niedrigem Schmelzpunkt umfasst, wobei das erste Polyolefin mit niedrigem Schmelzpunkt einen Schmelzpunkt von weniger als 121 °C aufweist, wobei das erste Polyolefin mit niedrigem Schmelzpunkt 5 bis 80 Gew.-% der Siegelschicht ausmacht, bezogen auf das Gesamtgewicht der Siegelschicht, wobei die Siegelschicht eine erste Außenschicht ist;
B) eine Hautschicht, die ein zweites Polyolefin mit niedrigem Schmelzpunkt umfasst, wobei das zweite Polyolefin mit niedrigem Schmelzpunkt einen Schmelzpunkt von weniger als 121 °C aufweist, wobei das zweite Polyolefin mit niedrigem Schmelzpunkt 5 bis 80 Gew.-% der Hautschicht ausmacht, bezogen auf das Gesamtgewicht der Hautschicht, wobei die Hautschicht eine zweite Außenschicht ist;
C) eine Barriereschicht, die mindestens ein Mitglied aus der Gruppe bestehend aus Polyvinylidenchlorid, Polyamid MXD6/MXDI, Polyamid 6I/6T umfasst;
D) eine erste Verbindungsschicht zwischen der Siegelschicht und der Barriereschicht, wobei die erste Verbindungsschicht ein erstes Verbindungspolymer mit einem Schmelzpunkt von weniger als 121°C umfasst, wobei das erste Verbindungspolymer 50 bis 100 Gew.-% der ersten Verbindungsschicht ausmacht, bezogen auf das Gesamtgewicht der ersten Verbindungsschicht; und
E) eine zweite Verbindungsschicht zwischen der Barriereschicht und der Hautschicht umfasst, wobei die zweite Verbindungsschicht ein zweites Verbindungspolymer mit einem Schmelzpunkt von weniger als 121°C umfasst, wobei das zweite Verbindungspolymer 50 bis 100 Gew.-% der zweiten Verbindungsschicht ausmacht, bezogen auf das Gesamtgewicht der zweiten Bindungsschicht;
wobei:
die Siegelschicht ferner ein erstes Cycloolefin-Copolymer in einer Menge von 5 bis 30 Gew.-%, bezogen auf das Gesamtgewicht der Siegelschicht, umfasst, wobei das Cycloolefin-Copolymer in der Siegelschicht mindestens ein Mitglied aus der Gruppe bestehend aus Ethylen/Norbornen-Copolymer und Polynorbornen-Homopolymer umfasst;
und
die Hautschicht ferner ein zweites Cycloolefin-Copolymer in einer Menge von 5 bis 30 Gew.-%, bezogen auf das Gesamtgewicht der Hautschicht, umfasst, wobei das Cycloolefin-Copolymer in der Hautschicht mindestens ein Mitglied aus der Gruppe bestehend aus Ethylen/Norbornen-Copolymer und Polynorbornen-Homopolymer,
umfasst;
und wobei der Verpackungsartikel ein Mitglied aus der Gruppe bestehend aus einem thermogeformten Beutel mit Deckel, einem Endsiegelbeutel, einem Seitensiegelbeutel, einem L-Siegelbeutel, einem U-Siegelbeutel und einem Form-Füll-Siegelbeutel ist.

14. Verfahren zur Herstellung eines retortenbehandelten, verpackten Produkts, bei dem:
A) ein Produkt in einen Verpackungsartikel eingebracht wird, der ein Mitglied ausgewählt aus thermogeformten Beuteln, Endsiegelbeuteln, Seitensiegelbeuteln, L-Siegelbeuteln, U-Siegelbeuteln und Form-Füll-Siegelbeuteln umfasst, wobei der Verpackungsartikel eine mehrschichtigen Verpackungsfolie umfasst; die
i) eine Siegelschicht, die ein erstes Polyolefin mit niedrigem Schmelzpunkt umfasst, wobei das erste Polyolefin mit niedrigem Schmelzpunkt einen Schmelzpunkt von weniger als 121 °C aufweist, wobei das erste Polyolefin mit niedrigem Schmelzpunkt 5 bis 80 Gew.-% der Siegelschicht ausmacht, bezogen auf das Gesamtgewicht der Siegelschicht, wobei die Siegelschicht eine erste Außenschicht ist;
ii) eine Hautschicht, die ein zweites Polyolefin mit niedrigem Schmelzpunkt umfasst, wobei das zweite Polyolefin mit niedrigem Schmelzpunkt einen Schmelzpunkt von weniger als 121 °C aufweist, wobei das zweite Polyolefin mit niedrigem Schmelzpunkt 5 bis 80 Gew.-% der Hautschicht ausmacht, bezogen auf das Gesamtgewicht der Hautschicht, wobei die Hautschicht eine zweite Außenschicht ist;
iii) eine Barriereschicht, die mindestens ein Mitglied aus der Gruppe bestehend aus Polyvinylidenchlorid, Polyamid MXD6/MXDI, Polyamid 6I/6T umfasst;
iv) eine erste Verbindungsschicht zwischen der Siegelschicht und der Barriereschicht, wobei die erste Verbindungsschicht ein erstes Verbindungspolymer mit einem Schmelzpunkt von weniger als 121°C umfasst, wobei das erste Verbindungspolymer 50 bis 100 Gew.-% der ersten Verbindungsschicht ausmacht, bezogen auf das Gesamtgewicht der ersten Verbindungsschicht; und
v) eine zweite Verbindungsschicht zwischen der Barriereschicht und der Hautschicht umfasst, wobei die zweite Verbindungsschicht ein zweites Verbindungspolymer mit einem Schmelzpunkt von weniger als 121°C umfasst, wobei das zweite Verbindungspolymer 50 bis 100 Gew.-% der zweiten Verbindungsschicht ausmacht, bezogen auf das Gesamtgewicht der zweiten Bindungsschicht;
wobei:
die Siegelschicht ferner ein erstes Cycloolefin-Copolymer in einer Menge von 5 bis 30 Gew.-%, bezogen auf das Gesamtgewicht der Siegelschicht, umfasst, wobei das Cycloolefin-Copolymer in der Siegelschicht mindestens ein Mitglied aus der Gruppe bestehend aus Ethylen/Norbornen-Copolymer und Polynorbornen-Homopolymer umfasst;
und
die Hautschicht ferner ein zweites Cycloolefin-Copolymer in einer Menge von 5 bis 30 Gew.-%, bezogen auf das Gesamtgewicht der Hautschicht, umfasst, wobei das Cycloolefin-Copolymer in der Hautschicht mindestens ein Mitglied aus der Gruppe bestehend aus Ethylen/Norbornen-Copolymer und Polynorbornen-Homopolymer, umfasst;
B) der Artikel in geschlossener Form versiegelt wird, so dass das Produkt von der mehrschichtigen Verpackungsfolie umgeben ist; und
C) das verpackte Produkt auf eine Temperatur von mindestens etwa 121° C für mindestens 30 Minuten erwärmt wird.

## Revendications

1. Film barrière autoclavable comprenant :
A) une couche d'étanchéité comprenant une première polyoléfine à point de fusion bas, la première polyoléfine à point de fusion bas présentant un point de fusion inférieur à 121°C, la première polyoléfine à point de fusion bas représentant de 5 à 80 % en poids de la couche d'étanchéité, sur la base du poids total de la couche d'étanchéité, la couche d'étanchéité étant une première couche externe ;
B) une couche de peau comprenant une seconde polyoléfine à point de fusion bas, la seconde polyoléfine à point de fusion bas présentant un point de fusion inférieur à 121°C, la seconde polyoléfine à point de fusion bas représentant de 5 à 80 % en poids de la couche de peau sur la base du poids total de la couche de peau, la couche de peau étant une seconde couche externe ;
C) une couche barrière comprenant au moins un élément sélectionné dans le groupe comprenant le chlorure de polyvinylidène, le polyamide MXD6/MXDI, le polyamide 6I/6T ;
D) une première couche de liaison entre la couche d'étanchéité et la couche barrière, la première couche de liaison comprenant un premier polymère de liaison présentant un point de fusion inférieur à 121°C, le premier polymère de liaison représentant de 50 à 100 % en poids de la première couche de liaison, sur la base du poids total de la première couche de liaison ;
E) une deuxième couche de liaison entre la couche barrière et la couche de peau, la deuxième couche de liaison comprenant un deuxième polymère de liaison présentant un point de fusion inférieur à 121°C, le deuxième polymère de liaison représentant de 50 à 100 % en poids de la deuxième couche de liaison, sur la base du poids total de la deuxième couche de liaison,
dans lequel :
la couche d'étanchéité comprend en outre un premier copolymère d'oléfine cyclique en une quantité de 5 à 30 % en poids, sur la base du poids total de la couche d'étanchéité, dans lequel le copolymère d'oléfine cyclique dans la couche d'étanchéité comprend au moins un élément sélectionné dans le groupe comprenant un copolymère d'éthylène/norbornène et un homopolymère de polynorbornène;
et
la couche de peau comprend en outre un second copolymère d'oléfine cyclique en une quantité de 5 à 30 % en poids, sur la base du poids total de la couche de peau, dans lequel le copolymère d'oléfine cyclique dans la couche de peau comprend au moins un élément sélectionné dans le groupe comprenant un copolymère d'éthylène/norbornène et un homopolymère de polynorbornène.

2. Film barrière autoclavable selon la revendication 1, dans lequel le chlorure de polyvinylidène comprend au moins un élément sélectionné dans le groupe comprenant un copolymère de chlorure de vinylidène/acrylate de méthyle et un copolymère de chlorure de vinylidène/chlorure de vinyle, dans lequel le chlorure de polyvinylidène est de préférence présent en une quantité de 90 à 100 % en poids, sur la base du poids total de la couche barrière et dans lequel le film présente de préférence un taux de transmission d'oxygène de 0,1 à 10 cm³/100 in² sur 24 h à 0 % d'humidité relative et 23 °C, mesuré conformément à ASTM D3985-81.

3. Film barrière autoclavable selon l'une quelconque des revendications 1-2, dans lequel : la couche d'étanchéité comprend en outre une première polyoléfine à point de fusion haut, la première polyoléfine à point de fusion haut présentant un point de fusion supérieur à 121 °C, la première polyoléfine à point de fusion haut étant présente dans un mélange avec la première polyoléfine à point de fusion bas ; et
la couche de peau comprend en outre une seconde polyoléfine à point de fusion haut, la seconde polyoléfine à point de fusion haut présentant un point de fusion supérieur à 121 °C, la seconde polyoléfine à point de fusion haut étant présente dans un mélange avec la première polyoléfine à point de fusion bas et la première polyoléfine à point de fusion haut.

4. Film barrière autoclavable selon la revendication 3, dans lequel :
la couche d'étanchéité comprend un mélange de la première polyoléfine à point de fusion bas et de la première polyoléfine à point de fusion haut, la première polyoléfine à point de fusion bas étant présente en une quantité de 10 à 65 % en poids, sur la base du poids de la couche d'étanchéité, la première polyoléfine à point de fusion haut étant présente en une quantité de 35 à 80 % en poids, sur la base du poids de la couche d'étanchéité ; et
la couche de peau comprend un mélange de la seconde polyoléfine à point de fusion bas et de la seconde polyoléfine à point de fusion haut, la seconde polyoléfine à point de fusion bas étant présente en une quantité de 10 à 70 % en poids, sur la base du poids de la couche de peau, la seconde polyoléfine à point de fusion haut étant présente en une quantité de 30 à 75 % en poids, sur la base du poids de la couche de peau.

5. Film barrière autoclavable selon la revendication 3, dans lequel :
la couche d'étanchéité comprend un mélange de la première polyoléfine à point de fusion bas et de la première polyoléfine à point de fusion haut, la première polyoléfine à point de fusion bas étant présente en une quantité de 15 à 50 % en poids, sur la base du poids de la couche d'étanchéité, la première polyoléfine à point de fusion haut étant présente en une quantité de 50 à 70 % en poids, sur la base du poids de la couche d'étanchéité ; et la couche de peau comprend un mélange de la seconde polyoléfine à point de fusion bas et de la seconde polyoléfine à point de fusion haut, la seconde polyoléfine à point de fusion bas étant présente en une quantité de 15 à 40 % en poids, sur la base du poids de la couche de peau, la seconde polyoléfine à point de fusion haut étant présente en une quantité de 45 à 60 % en poids, sur la base du poids de la couche de peau.

6. Film autoclavable selon l'une quelconque des revendications 3-5, dans lequel
la première polyoléfine à point de fusion bas comprend au moins un élément sélectionné dans le groupe comprenant un copolymère d'éthylène/butène, un copolymère d'éthylène/hexène, un copolymère d'éthylène/octène, et une résine ionomère ;
la première polyoléfine à point de fusion haut comprend au moins un élément sélectionné dans le groupe comprenant un copolymère d'éthylène/propylène et un polyéthylène haute densité ;
la seconde polyoléfine à point de fusion bas comprend au moins un élément sélectionné dans le groupe comprenant un copolymère d'éthylène/butène, un copolymère d'éthylène/hexène, un copolymère d'éthylène/octène, et une résine ionomère ; et
la première polyoléfine à point de fusion haut comprend au moins un élément sélectionné dans le groupe comprenant un copolymère d'éthylène/propylène et un polyéthylène haute densité.

7. Film barrière autoclavable selon l'une quelconque des revendications 3-6, dans lequel : la couche d'étanchéité comprend un mélange de la première polyoléfine à point de fusion bas, de la première polyoléfine à point de fusion haut et du premier copolymère d'oléfine cyclique, la première polyoléfine à point de fusion bas étant présente en une quantité de 10 à 50 % en poids, sur la base du poids de la couche d'étanchéité, la première polyoléfine à point de fusion haut étant présente en une quantité de 35 à 80 % en poids, sur la base du poids de la couche d'étanchéité, et le premier copolymère d'oléfine cyclique étant présent en une quantité de 5 à 25 % en poids, sur la base du poids de la couche d'étanchéité ; et
la couche de peau comprend un mélange de la seconde polyoléfine à point de fusion bas, de la seconde polyoléfine à point de fusion haut et du second copolymère d'oléfine cyclique, la seconde polyoléfine à point de fusion bas étant présente en une quantité de 10 à 45 % en poids, sur la base du poids de la couche de peau, la seconde polyoléfine à point de fusion haut étant présente en une quantité de 30 à 75 % en poids, sur la base du poids de la couche de peau, et le second copolymère d'oléfine cyclique étant présent en une quantité de 5 à 25 % en poids, sur la base du poids de la couche de peau.

8. Film barrière autoclavable selon l'une quelconque des revendications 3-7, dans lequel : la couche d'étanchéité comprend un mélange de la première polyoléfine à point de fusion bas, de la première polyoléfine à point de fusion haut et du premier copolymère d'oléfine cyclique, la première polyoléfine à point de fusion bas étant présente en une quantité de 15 à 40 % en poids, sur la base du poids de la couche d'étanchéité, la première polyoléfine à point de fusion haut étant présente en une quantité de 50 à 70 % en poids, sur la base du poids de la couche d'étanchéité, et le premier copolymère d'oléfine cyclique étant présent en une quantité de 12 à 18 % en poids, sur la base du poids de la couche d'étanchéité ; et
la couche de peau comprend un mélange de la seconde polyoléfine à point de fusion bas, de la seconde polyoléfine à point de fusion haut et du second copolymère d'oléfine cyclique, la seconde polyoléfine à point de fusion bas étant présente en une quantité de 15 à 25 % en poids, sur la base du poids de la couche de peau, la seconde polyoléfine à point de fusion haut étant présente en une quantité de 45 à 60 % en poids, sur la base du poids de la couche de peau, et le second copolymère d'oléfine cyclique étant présent en une quantité de 12 à 18 % en poids, sur la base du poids de la couche de peau.

9. Film autoclavable selon l'une quelconque des revendications 1-8, dans lequel le premier polymère de liaison comprend au moins un élément sélectionné dans le groupe comprenant un copolymère d'éthylène/ester insaturé, un copolymère d'éthylène/acide insaturé et une polyoléfine à fonction anhydride, et la première couche de liaison comprend le premier polymère de liaison en une quantité de 80 à 100 % en poids, sur la base du poids de la première couche de liaison ; et
le deuxième polymère de liaison comprend au moins un élément sélectionné dans le groupe comprenant un copolymère d'éthylène/ester insaturé, un copolymère d'éthylène/acide insaturé, une polyoléfine à fonction anhydride, et la deuxième couche de liaison comprend le deuxième polymère de liaison en une quantité de 80 à 100 % en poids, sur la base du poids de la première couche de liaison.

10. Film autoclavable selon l'une quelconque des revendications 1-9, comprenant en outre :
F) une troisième couche de liaison entre la première couche de liaison et la couche d'étanchéité, la troisième couche de liaison comprenant un troisième polymère de liaison présentant un point de fusion inférieur à 121 °C, dans lequel le troisième polymère de liaison comprend un premier copolymère d'éthylène/alpha-oléfine présentant une densité ≤ 0,90 g/cm³, le troisième polymère de liaison représentant de 10 à 80 % en poids, sur la base du poids total de la couche ; et
G) une quatrième couche de liaison entre la deuxième couche de liaison et la couche de peau, la quatrième couche de liaison comprenant un quatrième polymère de liaison présentant un point de fusion inférieur à 121 °C, dans lequel le quatrième polymère de liaison comprend un second copolymère d'éthylène/alpha-oléfine présentant une densité ≤ 0,90 g/cm³, le quatrième polymère de liaison représentant de 10 à 80 % en poids, sur la base du poids total de la couche.

11. Film autoclavable selon l'une quelconque des revendications 1-10, dans lequel le film présente une épaisseur de 76 à 254 µm (3 à 10 mils).

12. Film autoclavable selon l'une quelconque des revendications 1-11, dans lequel le film ne comprend pas de réseau polymère réticulé.

13. Article de conditionnement autoclavable comprenant le film barrière autoclavable comprenant,
A) une couche d'étanchéité comprenant une première polyoléfine à point de fusion bas, la première polyoléfine à point de fusion bas présentant un point de fusion inférieur à 121°C, la première polyoléfine à point de fusion bas représentant de 5 à 80 % en poids de la couche d'étanchéité, sur la base du poids total de la couche d'étanchéité, la couche d'étanchéité étant une première couche externe ;
B) une couche de peau comprenant une seconde polyoléfine à point de fusion bas, la seconde polyoléfine à point de fusion bas présentant un point de fusion inférieur à 121°C, la seconde polyoléfine à point de fusion bas représentant de 5 à 80 % en poids de la couche de peau sur la base du poids total de la couche de peau, la couche de peau étant une seconde couche externe ;
C) une couche barrière comprenant au moins un élément sélectionné dans le groupe comprenant le chlorure de polyvinylidène, le polyamide MXD6/MXDI, le polyamide 6I/6T ;
D) une première couche de liaison entre la couche d'étanchéité et la couche barrière, la première couche de liaison comprenant un premier polymère de liaison présentant un point de fusion inférieur à 121°C, le premier polymère de liaison représentant de 50 à 100 % en poids de la première couche de liaison, sur la base du poids total de la première couche de liaison ;
E) une deuxième couche de liaison entre la couche barrière et la couche de peau, la deuxième couche de liaison comprenant un deuxième polymère de liaison présentant un point de fusion inférieur à 121°C, le deuxième polymère de liaison représentant de 50 à 100 % en poids de la deuxième couche de liaison, sur la base du poids total de la deuxième couche de liaison,
dans lequel :
la couche d'étanchéité comprend en outre un premier copolymère d'oléfine cyclique en une quantité de 5 à 30 % en poids, sur la base du poids total de la couche d'étanchéité, dans lequel le copolymère d'oléfine cyclique dans la couche d'étanchéité comprend au moins un élément sélectionné dans le groupe comprenant un copolymère d'éthylène/norbornène et un homopolymère de polynorbornène;
et
la couche de peau comprend en outre un second copolymère d'oléfine cyclique en une quantité de 5 à 30 % en poids, sur la base du poids total de la couche de peau, dans lequel le copolymère d'oléfine cyclique dans la couche de peau comprend au moins un élément sélectionné dans le groupe comprenant un copolymère d'éthylène/norbornène et un homopolymère de polynorbornène,
et dans lequel l'article de conditionnement est un élément sélectionné dans le groupe comprenant une poche thermoformée à couvercle, un sac à étanchéité d'extrémité, un sac à étanchéité latérale, un sac à étanchéité en L, un sac à étanchéité en U et une poche de formage, remplissage et scellement.

14. Procédé de préparation d'un produit conditionné stérilisé, comprenant les étapes consistant à :
A) placer un produit dans un article de conditionnement comprenant un élément sélectionné parmi une poche thermoformée, un sac à étanchéité d'extrémité, un sac à étanchéité latérale, un sac à étanchéité en L, un sac à étanchéité en U et une poche de formage, remplissage et scellement, l'article de conditionnement comprenant le film de multicouche comprenant :
i) une couche d'étanchéité comprenant une première polyoléfine à point de fusion bas, la première polyoléfine à point de fusion bas présentant un point de fusion inférieur à 121°C, la première polyoléfine à point de fusion bas représentant de 5 à 80 % en poids de la couche d'étanchéité, sur la base du poids total de la couche d'étanchéité, la couche d'étanchéité étant une première couche externe ;
ii) une couche de peau comprenant une seconde polyoléfine à point de fusion bas, la seconde polyoléfine à point de fusion bas présentant un point de fusion inférieur à 121°C, la seconde polyoléfine à point de fusion bas représentant de 5 à 80 % en poids de la couche de peau sur la base du poids total de la couche de peau, la couche de peau étant une seconde couche externe ;
iii) une couche barrière comprenant au moins un élément sélectionné dans le groupe comprenant le chlorure de polyvinylidène, le polyamide MXD6/MXDI, le polyamide 6I/6T ;
iv) une première couche de liaison entre la couche d'étanchéité et la couche barrière, la première couche de liaison comprenant un premier polymère de liaison présentant un point de fusion inférieur à 121°C, le premier polymère de liaison représentant de 50 à 100 % en poids de la première couche de liaison, sur la base du poids total de la première couche de liaison ;
v) une deuxième couche de liaison entre la couche barrière et la couche de peau, la deuxième couche de liaison comprenant un deuxième polymère de liaison présentant un point de fusion inférieur à 121°C, le deuxième polymère de liaison représentant de 50 à 100 % en poids de la deuxième couche de liaison, sur la base du poids total de la deuxième couche de liaison,
dans lequel :
la couche d'étanchéité comprend en outre un premier copolymère d'oléfine cyclique en une quantité de 5 à 30 % en poids, sur la base du poids total de la couche d'étanchéité, dans lequel le copolymère d'oléfine cyclique dans la couche d'étanchéité comprend au moins un élément sélectionné dans le groupe comprenant un copolymère d'éthylène/norbornène et un homopolymère de polynorbornène;
et
la couche de peau comprend en outre un second copolymère d'oléfine cyclique en une quantité de 5 à 30 % en poids, sur la base du poids total de la couche de peau, dans lequel le copolymère d'oléfine cyclique dans la couche de peau comprend au moins un élément sélectionné dans le groupe comprenant un copolymère d'éthylène/norbornène et un homopolymère de polynorbornène,
B) sceller l'article fermé de sorte que le produit soit entouré par le film de conditionnement multicouche ; et
C) chauffer le produit conditionné à une température d'au moins environ 121 °C pendant au moins 30 minutes.
